(19) Europäisches Patentamt
European Patent Office
Office européen des brevets

(11) **EP 4 779 610 A1**

(12) **EUROPEAN PATENT APPLICATION**
published in accordance with Art. 153(4) EPC

(43) Date of publication:
**22.07.2026 Bulletin 2026/30**

(21) Application number: **24879636.9**

(22) Date of filing: **09.10.2024**

(51) International Patent Classification (IPC):
***G08G 1/16*** *(2006.01)* ***G16Y 10/40*** *(2020.01)*
***G16Y 20/20*** *(2020.01)* ***G16Y 40/10*** *(2020.01)*

(52) Cooperative Patent Classification (CPC):
**G08G 1/16; G16Y 10/40; G16Y 20/20; G16Y 40/10**

(86) International application number:
**PCT/JP2024/036125**

(87) International publication number:
**WO 2025/084211 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 JP 2023179071**

(71) Applicant: **SoftBank Group Corp.**
**Tokyo 105-7537 (JP)**

(72) Inventor: **SON, Masayoshi**
**Tokyo 105-7537 (JP)**

(74) Representative: **DREISS Patentanwälte PartG mbB**
**Friedrichstraße 6**
**70174 Stuttgart (DE)**

# (54) INFORMATION PROCESSING DEVICE, INFORMATION PROCESSING METHOD, AND INFORMATION PROCESSING PROGRAM

(57) There is provided an information processing device including: a first processor that outputs point information obtained by recognizing a captured object as a point from an image of the object captured by a first camera provided in a vehicle; a second processor that outputs identification information for identifying the captured object from an image of the object captured by a second camera which is provided in the vehicle and faces a direction corresponding to a direction of the first camera; and a third processor that associates the point information output from the first processor with the identification information output from the second processor, in which the third processor further performs driving control of the vehicle based on a result obtained by simulating a movement of the object on a digital map on which the point information and the identification information which are associated with each other are plotted.

FIG.2A

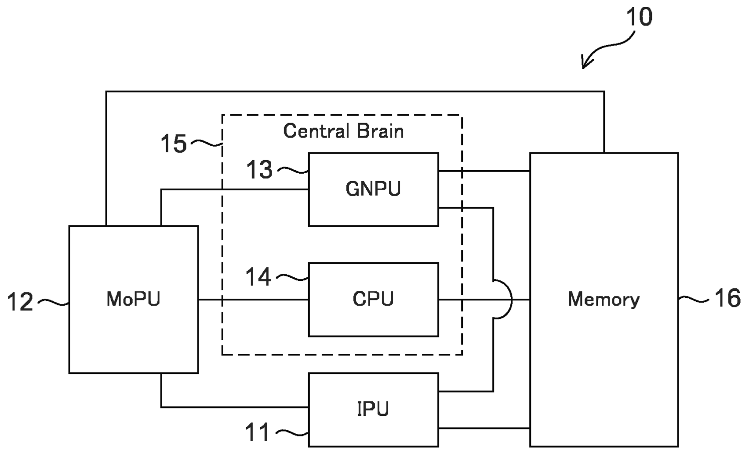




EP 4 779 610 A1

## Description

CROSS-REFERENCE TO RELATED APPLICATIONS

This application is a continuation application of International Application No. PCT/ JP2024/036125 filed October 9, 2024 the disclosure of which is incorporated herein by reference in its entirety. Further, this application claims priorities from Japanese Patent Application No. 2023-179071 filed October 17, 2023, the disclosure of which is incorporated herein by reference in their entirety.

Technical Field

The present disclosure relates to an information processing device, an information processing method, and an information processing program.

Background Art

Japanese Patent Application Laid-Open (JP-A) No. 2022-035198 describes a vehicle having an autonomous driving function.

SUMMARY OF INVENTION

Meanwhile, in a case where a vehicle is driven by autonomous driving as disclosed in JP-A No. 2022-035198, autonomous driving is controlled by using a plurality of images obtained by capturing the surroundings of the vehicle by a camera. At this time, there is a problem that the amount of calculation required to control autonomous driving increases when all movement patterns of surrounding objects are considered.

Therefore, an object of the present disclosure is to provide an information processing device, an information processing method, and an information processing program capable of reducing a calculation amount in a case where driving control of a vehicle is performed in consideration of each of movement patterns of surrounding objects.

According to the present disclosure, there is provided an information processing device including: a first processor that outputs point information obtained by recognizing a captured object as a point from an image of the object captured by a first camera provided in a vehicle; a second processor that outputs identification information for identifying the captured object from an image of the object captured by a second camera which is provided in the vehicle and faces a direction corresponding to a direction of the first camera; and a third processor that associates the point information output from the first processor with the identification information output from the second processor, in which the third processor further performs driving control of the vehicle based on a result obtained by simulating a movement of the object on a digital map on which the point information and the identification information which are associated with each other are plotted.

Further, in the information processing device according to the present disclosure, the first processor outputs the point information including movement information indicating a movement of the object, a collision risk between the vehicle and the object is predicted in the simulation by using each movement pattern of the object that is determined according to the movement information included in the point information and the identification information, and the third processor performs driving control of the vehicle based on the collision risk predicted in the simulation.

Further, in the information processing device according to the present disclosure, the third processor performs driving control of the vehicle so as to avoid a collision in which the collision risk predicted in the simulation is equal to or higher than a threshold value, and performs driving control of the vehicle such that traffic congestion of subsequent vehicles does not occur in a case where all of the collision risks predicted in the simulation are lower than the threshold value.

Further, in the information processing device according to the present disclosure, in the simulation, a collision risk between the vehicle and the object is predicted by using a point representing the object or a polygon surrounding a contour of the object.

According to the present disclosure, there is provided an information processing method causing a computer to execute processing including: outputting point information obtained by recognizing a captured object as a point from an image of the object captured by a first camera provided in a vehicle; outputting identification information for identifying the captured object from an image of the object captured by a second camera which is provided in the vehicle and faces a direction corresponding to a direction of the first camera; associating the point information which is output with the identification information which is output; and performing driving control of the vehicle based on a result obtained by simulating a movement of the object on a digital map on which the point information and the identification information which are associated with each other are plotted.

According to the present disclosure, there is provided an information processing program for causing a computer to execute processing including: outputting point information obtained by recognizing a captured object as a point from an image of the object captured by a first camera provided in a vehicle; outputting identification information for identifying the captured object from an image of the object captured by a second camera which is provided in the vehicle and faces a direction corresponding to a direction of the first camera; associating the point information which is output with the identification information which is output; and performing driving control of the vehicle based on a result obtained by simulating a movement of the object on a digital map on which the point information and the identification information which are associated with each other are plotted.

Note that the above summary of the invention does not list all of the necessary features of the present invention. Further, a subcombination of these feature groups may also be an invention.

BRIEF DESCRIPTION OF DRAWINGS

Fig. 1A is a schematic diagram illustrating an example of an information processing system.
Fig. 1B is a schematic diagram illustrating an example of a vehicle provided with a central brain.
Fig. 2A is a first block diagram illustrating an example of a configuration of an information processing device.
Fig. 2B is a flowchart illustrating an example of a flow of processing of a central brain of the information processing device.
Fig. 2C is a flowchart illustrating an example of a flow of a server.
Fig. 3 is a second block diagram illustrating an example of a configuration of an information processing device.
Fig. 4 is an explanatory diagram illustrating an example of point information output from a MoPU.
Fig. 5 is a third block diagram illustrating an example of a configuration of an information processing device.
Fig. 6 is a fourth block diagram illustrating an example of a configuration of an information processing device.
Fig. 7 is an explanatory diagram illustrating an example of association between point information and label information.
Fig. 8 is an explanatory diagram illustrating a schematic configuration of a vehicle.
Fig. 9 is a block diagram illustrating an example of a functional configuration of a cooling execution device.
Fig. 10 is a fifth block diagram illustrating an example of a configuration of an information processing device.
Fig. 11 is a sixth block diagram illustrating an example of a configuration of an information processing device.
Fig. 12 is a diagram schematically illustrating detection of a coordinate of an object in a time series.
Fig. 13 is a seventh block diagram illustrating an example of a configuration of an information processing device.
Fig. 14 is an explanatory diagram for explaining an image of an object captured by an event camera.
Fig. 15 is an explanatory diagram schematically illustrating an example of a hardware configuration of a computer functioning as an information processing device or a cooling execution device.

DESCRIPTION OF EMBODIMENTS

Hereinafter, embodiments of the present disclosure will be described, but the following embodiments do not limit the invention according to the claims. In addition, all combinations of features described in the embodiments are not necessarily essential to the solutions of the invention.

(First Embodiment)

First, a first embodiment according to the present embodiment will be described. As an example, at least a part of an information processing device according to the present disclosure is provided in a vehicle 100, and performs autonomous driving control of the vehicle 100. In addition, the information processing device can provide a traveling system that can realize autonomous driving in real time based on data obtained by various sensor inputs in AI/multivariate analysis/goal seek/strategy planning/optimal probability solution/optimal speed solution/optimal course management/edge by a level 6 and is adjusted based on a delta optimal solution. The vehicle 100 is an example of "object".

Here, the "level 6" is a level representing autonomous driving, and corresponds to a level higher than a level 5 representing fully autonomous driving. Although the level 5 represents fully autonomous driving, the level 5 is at the same level as driving by a person, and there is still a probability that an accident or the like will occur. The level 6 represents a level higher than the level 5, and corresponds to a level at which the probability of occurrence of an accident is lower than the level 5.

The computing power at the level 6 is approximately 1000 times the computing power at the level 5. Therefore, high-performance driving control that cannot be realized at the level 5 can be realized.

Fig. 1A is a schematic diagram illustrating an example of an information processing system 1000. The information processing system 1000 includes a vehicle 100 provided with a central brain 15 and a server 200, and the central brain 15 and the server 200 are connected via a network N.

Fig. 1B is a schematic diagram illustrating an example of the vehicle 100 provided with the central brain 15. A plurality of gate ways are communicably connected to the central brain 15. The central brain 15 is connected to an external cloud server via the gate way. The central brain 15 is configured to be able to access an external cloud server via the gate way. On the other hand, due to the presence of the gate way, the central brain 15 is configured not to be directly accessed from the outside.

The central brain 15 outputs a request signal to the cloud server every time a predetermined time elapses. Specifically, the central brain 15 outputs a request signal indicating an inquiry to the cloud server every billionth of a second. As an example, the central brain 15 controls autonomous driving of the level 6 based on a plurality of pieces of information acquired via the gate way.

Fig. 2A is a first block diagram illustrating an example of a configuration of an information processing device 10. The information processing device 10 includes an image processing unit (IPU) 11, a motion processing unit (MoPU) 12, a central brain 15, and a memory 16. The central brain 15 includes a graphics neural network processing unit (GNPU) 13 and a central processing unit (CPU) 14.

The IPU 11 is built in an ultra-high-resolution camera (not illustrated) provided in the vehicle 100. The IPU 11 performs predetermined image processing such as Bayer transformation, demosaicing, noise removal, and sharpening on the image of the object present around the vehicle 100, the image being captured by the ultra-high-resolution camera, and outputs the processed image of the object, for example, at a frame rate of 10 frames/second and a resolution of 12 million pixels. In addition, the IPU 11 outputs identification information for identifying the captured object from the image of the object that is captured by the ultra-high-resolution camera. The identification information is information necessary for identifying what the captured object is (for example, whether the captured object is a person or an obstacle). In the present embodiment, the IPU 11 outputs label information (for example, information indicating whether the captured object is a dog, a cat, or a bear) indicating a type of the captured object as the identification information. Further, the IPU 11 outputs position information indicating a position of the captured object in a camera coordinate system of the ultra-high-resolution camera. The image, the label information, and the position information that are output from the IPU 11 are supplied to the central brain 15 and the memory 16. The IPU 11 is an example of a "second processor", and the ultra-high-resolution camera is an example of a "second camera".

The MoPU 12 is built in a separate camera (not illustrated) different from the ultra-high-resolution camera installed in the vehicle 100. The MoPU 12 outputs point information, which is obtained by recognizing a captured object as a point from an image of an object that is captured at a frame rate of 100 frames/second or higher by the separate camera facing a direction corresponding to a direction of the ultra-high-resolution camera, for example, at a frame rate of 100 frames/second or higher. The point information output from the MoPU 12 is supplied to the central brain 15 and the memory 16. As described above, the image that is used by the MoPU 12 to output the point information and the image that is used by the IPU 11 to output the identification information are images captured by the separate camera and the ultra-high-resolution camera in the corresponding direction. Here, the "corresponding direction" is a direction in which an imaging range of the separate camera and an imaging range of the ultra-high-resolution camera overlap with each other. In the above case, the separate camera captures an image of an object in a direction in which the imaging range of the separate camera and the imaging range of the ultra-high-resolution camera overlap with each other. Note that capturing of images of the object by the ultra-high-resolution camera and the separate camera in the corresponding direction is realized, for example, by obtaining a correspondence relationship between the camera coordinate systems of the ultra-high-resolution camera and the separate camera in advance.

For example, the MoPU 12 outputs, as the point information, coordinate values of a point indicating the position of the object on at least two coordinate axes in a three-dimensional orthogonal coordinate system. The coordinate values indicate a center point (or a center of gravity) of the object as an example. Further, the MoPU 12 outputs, as coordinate values on the two coordinate axes, a coordinate value (hereinafter, referred to as "x coordinate value") on an axis (x-axis) along a width direction in the three-dimensional orthogonal coordinate system and a coordinate value (hereinafter, referred to as "y coordinate value") on an axis (y-axis) along a height direction in the three-dimensional orthogonal coordinate system. Note that the x-axis is an axis along a vehicle width direction of the vehicle 100 and the y-axis is an axis along a height direction of the vehicle 100.

With the above configuration, since the point information for one second that is output from the MoPU 12 includes the x coordinate value and the y coordinate value corresponding to 100 frames or more, it is possible to recognize a movement (a movement direction and a movement speed) of the object on the x-axis and the y-axis in the three-dimensional orthogonal coordinate system based on the point information. That is, the point information that is output from the MoPU 12 includes position information indicating a position of the object in the three-dimensional orthogonal coordinate system and movement information indicating a movement of the object.

As described above, the point information that is output from the MoPU 12 does not include information necessary for identifying what the captured object is (for example, whether the captured object is a person or an obstacle), and includes only information indicating a movement (a movement direction and a movement speed) of the center point (or the center of gravity) of the object on the x-axis and the y-axis. Then, since the point information that is output from the MoPU 12 does not include image information, the amount of data to be output to the central brain 15 and the memory 16 can be dramatically reduced. The MoPU 12 is an example of a "first processor", and the separate camera is an example of a "first camera".

As described above, in the present embodiment, the frame rate of the separate camera in which the MoPU 12 is incorporated is higher than the frame rate of the ultra-high-resolution camera in which the IPU 11 is incorporated. Specifically, the frame rate of the separate camera is 100 frames/second or higher, and the frame rate of the ultra-high-resolution camera is 10 frames/second. That is, the frame rate of the separate camera is 10 or more times the frame rate of the ultra-high-resolution camera.

The central brain 15 associates the point information output from the MoPU 12 with the label information output from the IPU 11. For example, due to a frame rate difference between the separate camera described above and the ultra-high-resolution camera, there is a case where the central brain 15 acquires the point information of the object but does not acquire the label information of the object. In this state, the central brain 15 recognizes the x coordinate value and the y coordinate value of the object based on the point information, but does not recognize what the object is.

Thereafter, in a case where the label information of the object described above is acquired, the central brain 15 derives a type (for example, person) of the label information. Then, the central brain 15 associates the label information with the point information acquired above. Thereby, the central brain 15 recognizes the x coordinate value and the y coordinate value of the object based on the point information, and recognizes what the object is. The central brain 15 is an example of a "third processor".

Here, in a case where there are a plurality of objects captured by the ultra-high-resolution camera and the separate camera, such as an object A and an object B, the central brain 15 associates the point information and the label information for each object as follows. Due to the frame rate difference between the separate camera and the ultra-high-resolution camera, there is a case where the central brain 15 acquires pieces of point information (hereinafter, referred to as "point information A" and "point information B") for the object A and the object B but does not acquire the label information. In this state, the central brain 15 recognizes the x coordinate value and the y coordinate value of the object A based on the point information A, and recognizes the x coordinate value and the y coordinate value of the object B based on the point information B. However, the central brain 15 does not recognize what these objects are.

Thereafter, in a case where one piece of label information is acquired, the central brain 15 derives a type (for example, person) of the one piece of label information. Then, the central brain 15 specifies point information to be associated with the one piece of label information based on the position information that is output from the IPU 11 together with the one piece of label information and the position information included in the acquired point information A and the acquired point information B. For example, the central brain 15 specifies point information including position information indicating a position closest to the position of the object that is indicated by the position information output from the IPU 11, and associates the point information with the one piece of label information. In a case where the point information specified above is the point information A, the central brain 15 associates the one piece of label information with the point information A, recognizes the x coordinate value and the y coordinate value of the object A based on the point information A, and recognizes what the object A is.

As described above, in a case where there are a plurality of objects captured by the ultra-high-resolution camera and the separate camera, the central brain 15 associates the point information and the label information based on the position information output from the IPU 11 and the position information included in the point information output from the MoPU 12.

In addition, the central brain 15 recognizes an object (a person, an animal, a road, a signal, a sign, a crosswalk, an obstacle, a building, or the like) present around the vehicle 100 based on the image and the label information output from the IPU 11. Further, the central brain 15 recognizes a position and a movement of the object that is present around the vehicle 100 and is recognized as what the object is, based on the point information output from the MoPU 12. Based on the recognized information, the central brain 15 performs, for example, control (speed control) of a motor for driving wheels, brake control, and steering wheel control, and controls autonomous driving of the vehicle 100. For example, the central brain 15 controls autonomous driving of the vehicle 100 so as to avoid collision with an object from the position information and the movement information that are included in the point information output from the MoPU 12. In the central brain 15, the GNPU 13 may perform processing related to image recognition, and the CPU 14 may perform processing related to vehicle control.

In general, an ultra-high-resolution camera is used to perform image recognition in autonomous driving. Here, from an image captured by the ultra-high-resolution camera, it is possible to recognize what an object included in the image is. However, this is not sufficient for autonomous driving at the level 6. At the level 6, it is also necessary to recognize a movement of an object with higher accuracy. By recognizing a movement of an object with higher accuracy by the MoPU 12, for example, an avoidance operation in which the vehicle 100 that travels by autonomous driving avoids an obstacle can be performed with higher accuracy. However, the ultra-high-resolution camera can acquire images only at a frame rate of approximately 10 frames/second, and accuracy in analyzing a movement of an object is lower than accuracy of the camera provided with the MoPU 12. On the other hand, the camera provided with the MoPU 12 can output an image at a high frame rate of, for example, 100 frames/second.

Therefore, the information processing device 10 according to the first embodiment includes two independent processors, the IPU 11 and the MoPU 12. The information processing device 10 gives a role of acquiring information necessary for identifying what a captured object is to the IPU 11 provided in the ultra-high-resolution camera, and gives a role of detecting a position and a movement of the object to the MoPU 12 provided in the separate camera. The MoPU 12 recognizes a captured object as a point, and analyzes a movement direction and a movement speed of a coordinate of the point on at least the x-axis and the y-axis in the three-dimensional orthogonal coordinate system. The detection of the entire contour of the object and the type of the object can be performed based on the image from the ultra-high-resolution camera, and thus, the MoPU 12 can recognize how the entire object will behave by, for example, recognizing a movement of the center point of the object.

According to the method of analyzing only the movement and the speed of the center point of the object, the amount of data to be output to the central brain 15 is greatly suppressed as compared with a method of determining a movement of the entire image of the object. In addition, the amount of calculation in the central brain 15 can be significantly reduced. For example, in a case where an image of 1000 pixels $\times$ 1000 pixels is output to the central brain 15 at a frame rate of 1000 frames/second, when color information is included, data of 4 billion bits/second is output to the central brain 15. The MoPU 12 outputs only the point information indicating the movement of the center point of the object, and thus, the amount of data to be output to the central brain 15 can be compressed to 20,000 bits/second. That is, the amount of data to be output to the central brain 15 is compressed to 1/200,000.

In this manner, the image that has a low frame rate and high resolution and the label information, which are output from the IPU 11, and the point information that has a high frame rate and the small amount of data and is output from the MoPU 12 are used in combination. Thereby, it is possible to realize object recognition including a movement of the object with the small amount of data.

Further, in the information processing device 10, the central brain 15 associates the point information output from the MoPU 12 with the label information output from the IPU 11, and thus, it is possible to recognize information related to the type of the object and the movement of the object.

<Driving Control for Autonomous Driving>

In the present embodiment, a high-performance digital map is used in a simulation for driving control.

The MoPU 12 detects an actual object on the front, rear, left, and right sides of the vehicle 2000 times/second, and the MoPU 12 extracts movement information of the object. In addition, the label information indicating a result obtained by identifying an object, such as a vehicle, an animal, or a pedestrian, on the front, rear, left, and right sides of the vehicle 100 is acquired from the IPU 11. The server 200 plots a result in which the acquired movement information of the object and the acquired label information are associated with each other on the digital map.

The server 200 recognizes a feature of the object from the label information, considers the feature of the object based on the movement information of the object, and simulates a next movement of the object. Here, the feature of the object is, for example, a feature of a cat, a feature of a human, a feature of a bird, or a feature of another vehicle, and it is possible to infer a movement of the other object to some extent from the feature of the other object. That is, in a case where the other object is a cat, although the other object moves at an extremely fast speed, a speed of the other object can be estimated to be 481 m/h at the maximum, and a movement range of the other object is also limited. Further, in a case where the other object is a bird, it is considered that a movement direction of the other object is right above.

Specifically, the movement information is vectorized, the feature of the object is recognized, and all possibilities of the next movement of the object are recognized. For example, all possibilities, such as a movement of 30 cm to the right at a speed of 2 m per second, jumping, crouching, and a diagonally forward movement of 50 cm to the left at a speed of 1 m per second, are inferred.

Then, from inference results of the movement of the vehicle 100 and all movements of all objects on the front, rear, left, and right sides of the vehicle 100, all events indicating what will occur next are inferred. For example, a plurality of events, such as a collision between the vehicle 100 and another vehicle, a contact between the vehicle 100 and a street tree, and avoidance of contact with a bicycle approaching the vehicle 100 from the opposite direction with a clearance of almost 1 mm, are predicted. In addition, damage prediction at that time is also performed. There may be hundreds or even trillions of such inferences.

Driving control of the vehicle 100 is performed so as to avoid a serious collision event among the inferred events. Alternatively, in a case where a serious collision event does not occur, driving control is performed such that traffic congestion of subsequent vehicles does not occur. In this manner, optimal driving control is performed according to the surrounding situation.

In addition, in the inference of the movement of the object and the inference of the event, since all the possibilities are inferred, the amount of calculation increases. Therefore, in the present embodiment, extracted movement information is used as the movement of the object. That is, by using a polygon (wire frame) including points and contours detected by the MoPU 12 instead of using all the pieces of image processing information, the amount of data used for inference is reduced as much as possible.

As described above, the central brain 15 performs driving control for autonomous driving of the vehicle 100. At this time, the central brain 15 transmits the point information and the label information, which are associated with each other, and a driving control sequence for a predetermined time period to the server 200. The driving control sequence is time-series data of a combination of a steering amount, an accelerator operation amount, and a brake operation amount.

The server 200 simulates a movement of the object on the digital map on which the point information and the label information that are associated with each other are plotted. In the simulation, the server 200 predicts a collision risk between the vehicle 100 and the object using each movement pattern of the object determined according to the movement information included in the point information and the label information.

In the simulation, the server 200 predicts a collision risk between the vehicle and the object by using a point representing the object or a polygon surrounding a contour of the object. The collision risk represents a possibility of a collision and a severity level of the collision.

The central brain 15 performs driving control of the vehicle 100 based on a result obtained by simulating a movement of the object on the digital map on which the point information and the label information that are associated with each other are plotted.

Specifically, the central brain 15 performs driving control of the vehicle 100 based on the collision risk predicted by the simulation.

More specifically, the central brain 15 performs driving control of the vehicle 100 so as to avoid a collision in which the collision risk predicted by the simulation is equal to or higher than a threshold value. In a case where all the collision risks predicted by the simulation are lower than the threshold value, the central brain 15 performs driving control of the vehicle 100 such that traffic congestion of subsequent vehicles does not occur.

Next, a flow of processing of the information processing system 1000 in autonomous driving control will be described. First, a flow of processing in the central brain 15 will be described with reference to Fig. 2B. This processing is repeatedly executed every predetermined period.

First, in step S100, the central brain 15 acquires the point information including the movement information from the MoPU 12.

In step S102, the central brain 15 acquires the label information that is identification information of an object from the IPU 11.

In step S103, the central brain 15 associates the point information acquired in step S100 with the label information acquired in step S102.

In step S104, the central brain 15 generates a driving control sequence for a predetermined time period when the vehicle travels toward a destination.

In step S106, the central brain 15 transmits the association result in step S103, the driving control sequence acquired in step S104, and the position information of the vehicle 100 to the server 200. Note that the position information of the vehicle 100 may be acquired by a GPS sensor (not illustrated) provided in the vehicle 100.

Here, when receiving the result obtained by associating the point information and the label information, the driving control sequence, and the position information of the vehicle 100 from the central brain 15, the server 200 executes a processing routine illustrated in Fig. 2C.

In step S120, the server 200 plots the point information and the label information that are associated with each other on the digital map by using the position information of the vehicle 100.

In step S122, the server 200 simulates a movement of the object. At this time, in the simulation, the server 200 calculates a movement of the object by using each movement pattern of the object that is determined according to the movement information included in the point information and the label information.

In step S124, the server 200 predicts a collision risk between the vehicle 100 and the object, for each movement pattern, based on a result obtained by simulating a movement of the object.

In step S126, the server 200 determines whether or not the collision risk predicted for at least one movement pattern is equal to or higher than a threshold value. In a case where the collision risk predicted for at least one movement pattern is equal to or higher than the threshold value, the process proceeds to step S128. On the other hand, in a case where the collision risk predicted for all the movement patterns is lower than the threshold value, the process proceeds to step S130.

In step S128, the server 200 corrects the driving control sequence such that the vehicle 100 does not collide with the object in the movement pattern in which the collision risk is equal to or higher than the threshold value. The driving control sequence may be corrected by using a learned model. Learning of the model may be performed by using training data that is a combination of the movement pattern in which the collision risk is equal to or higher than the threshold value and a correct driving control sequence (a driving control sequence of manual driving) for preventing collision with the object at this time. In addition, learning of the model is performed by using training data at a level 2 representing autonomous driving. Specifically, learning is performed to update the model by using a difference between the driving control sequence obtained by the model and the driving control sequence of manual driving. In addition, learning of the model is performed by sequentially using training data at a level 3 representing autonomous driving and training data at a level 4 representing autonomous driving.

In step S130, the server 200 corrects the driving control sequence so as to avoid traffic congestion of subsequent vehicles. The driving control sequence may be corrected by using a learned model. Learning of the model may be performed by using training data that is a combination of the point information of a subsequent vehicle and a correct driving control sequence (a driving control sequence of manual driving) for preventing traffic congestion of subsequent vehicles at this time.

In step S132, the driving control sequence corrected in step S128 or step S130 is transmitted to the central brain 15.

Then, in step S108 in Fig. 2B, the central brain 15 acquires the driving control sequence transmitted from the server 200.

In step S110, the central brain 15 performs driving control of the vehicle 100 by using the acquired driving control sequence.

Note that, although the case where the simulation is performed by the server 200 has been described as an example, the simulation may be performed in the central brain 15. In addition, the case where the driving control sequence for the predetermined time period when traveling toward the destination is generated by the central brain 15 has been described as an example, but the driving control sequence may be generated by the server 200.

(Second Embodiment)

Next, a second embodiment according to the present embodiment will be described while omitting or simplifying an overlapping portion with the above embodiment.

Fig. 3 is a second block diagram illustrating an example of a configuration of an information processing device 10. As illustrated in Fig. 3, the information processing device 10 provided in the vehicle 100 includes a MoPU 12L corresponding to a left eye, a MoPU 12R corresponding to a right eye, an IPU 11, and a central brain 15.

The MoPU 12L includes a camera 30L, a radar 32L, an infrared camera 34L, and a core 17L. In addition, the MoPU 12R includes a camera 30R, a radar 32R, an infrared camera 34R, and a core 17R. Note that, hereinafter, the MoPU 12L and the MoPU 12R will be referred to as "MoPU 12" in a case where the MoPU 12L and the MoPU 12R are not distinguished from each other, the camera 30L and the camera 30R will be referred to as "camera 30" in a case where the camera 30L and the camera 30R are not distinguished from each other, the radar 32L and the radar 32R will be referred to as "radar 32" in a case where the radar 32L and the radar 32R are not distinguished from each other, the infrared camera 34L and the infrared camera 34R will be referred to as "infrared camera 34" in a case where the infrared camera 34L and the infrared camera 34R are not distinguished from each other, and the core 17L and the core 17R will be referred to as "core 17" in a case where the core 17L and the core 17R are not distinguished from each other.

The camera 30 included in the MoPU 12 captures an image of an object at a frame rate (120 frames/second, 240 frames/second, 480 frames/second, 960 frames/second, or 1920 frames/second) higher than a frame rate (for example, 10 frames/sec) of the ultra-high-resolution camera included in the IPU 11. The frame rate of the camera 30 is variable. The camera 30 is an example of a "first camera".

The radar 32 included in the MoPU 12 acquires a radar signal which is a signal based on a reflected wave of an electromagnetic wave with which the object is irradiated and which is reflected from the object. The infrared camera 34 included in the MoPU 12 is a camera that captures an infrared image.

The core 17 (for example, including one or more CPUs) included in the MoPU 12 extracts a feature point for each image of one frame that is captured by the camera 30, and outputs, as point information, an x coordinate value and a y coordinate value of the object in the three-dimensional orthogonal coordinate system. The core 17 sets, for example, a center point (a center of gravity) of the object extracted from an image, as a feature point. Note that the point information output by the core 17 includes position information and movement information as in the above embodiment.

The IPU 11 includes an ultra-high-resolution camera (not illustrated), and outputs an image of an object captured by the ultra-high-resolution camera, label information indicating a type of the object, and position information indicating a position of the object in a camera coordinate system of the ultra-high-resolution camera.

The central brain 15 acquires the point information which is output from the MoPU 12, and the image, the label information, and the position information which are output from the IPU 11. Then, the central brain 15 associates the label information of the object, which is present at a position at which the position information included in the point information output from the MoPU 12 and the position information output from the IPU 11 correspond to each other, with the point information. Thereby, the information processing device 10 can associate the information indicating what the object indicated by the label information is with the position and the movement of the object that are indicated by the point information.

Here, the MoPU 12 changes the frame rate of the camera 30 according to a predetermined factor. In the present embodiment, the MoPU 12 changes the frame rate of the camera 30 according to a score related to an external environment as an example of a predetermined factor. In this case, the MoPU 12 calculates a score related to the external environment of the vehicle 100, and changes the frame rate of the camera 30 according to the calculated score. Then, the MoPU 12 outputs, to the camera 30, a control signal for causing the camera 30 to capture an image at the changed frame rate. Thereby, the camera 30 captures an image at the frame rate indicated by the control signal. With this configuration, according to the information processing device 10, an image of an object can be captured at a frame rate suitable for the external environment.

Note that the information processing device 10 provided in the vehicle 100 includes a plurality of types of sensors (not illustrated). The MoPU 12 calculates a risk related to the movement of the vehicle 100 as a score related to the external environment of the vehicle 100 based on pieces of sensor information (for example, a movement of a center of gravity of a weight, detection of a material of a road, detection of an outside air temperature, detection of outside air humidity, detection of an inclination angle of a slope in vertical and lateral directions, detection of a frozen state or the moisture amount of a road, a material of each tire, a wear state of a tire, detection of a tire pressure, a road width, the presence or absence of overtaking prohibition, vehicle type information of oncoming vehicles and vehicles in front of or behind the vehicle, a cruising state of these vehicles, a surrounding situation (birds, animals, soccer balls, accident vehicles, earthquakes, housework, wind, typhoons, heavy rain, light rain, snowstorm, fog, and the like), and the like) input from a plurality of types of sensors and the point information. The risk indicates a danger level of a place through which the vehicle 100 will travel in the future. In this case, the MoPU 12 changes the frame rate of the camera 30 according to the calculated risk. The vehicle 100 is an example of a "moving object". With this configuration, according to the information processing device 10, the frame rate of the camera 30 can be changed according to the risk related to the movement of the vehicle 100. The sensor is an example of a "detection unit", and the sensor information is an example of "detection information".

For example, the MoPU 12 increases the frame rate of the camera 30 as the calculated risk becomes higher. In a case where the calculated risk is lower than a first threshold value, the MoPU 12 changes the frame rate of the camera 30 to 120 frames/second. Further, in a case where the calculated risk is equal to or higher than the first threshold value and is lower than a second threshold value, the MoPU 12 changes the frame rate of the camera 30 to any one of 240 frames/second, 480 frames/second, and 960 frames/second. Further, in a case where the calculated risk is equal to or higher than the second threshold value, the MoPU 12 changes the frame rate of the camera 30 to 1920 frames/second. Note that, in a case where the risk is any one of the above, the MoPU 12 may perform the following processing in addition to causing the camera 30 to capture an image at the selected frame rate. The MoPU 12 may output a control signal to the radar 32 and the infrared camera 34 so as to acquire a radar signal and capture an infrared image with a numerical value corresponding to the frame rate.

For example, the MoPU 12 decreases the frame rate of the camera 30 as the calculated risk decreases. In a state where the frame rate of the camera 30 is set to 1920 frames/second, the MoPU 12 changes the frame rate of the camera 30 to any one of 240 frames/second, 480 frames/second, and 960 frames/second in a case where the calculated risk is equal to or higher than the first threshold value and is lower than the second threshold value. Further, in a state where the frame rate of the camera 30 is set to 1920 frames/second, the MoPU 12 changes the frame rate of the camera 30 to 120 frames/second in a case where the calculated risk is lower than the first threshold value. Further, in a state where the frame rate of the camera 30 is set to any one of 240 frames/second, 480 frames/second, and 960 frames/second, the MoPU 12 changes the frame rate of the camera 30 to 120 frames/second in a case where the calculated risk is lower than the first threshold value. Note that, in this case, similarly to the above, the control signal may be output to the radar 32 and the infrared camera 34 so as to acquire a radar signal and capture an infrared image with a numerical value according to the changed frame rate of the camera 30.

Further, the MoPU 12 may calculate the risk by using big data related to traveling that is known before the vehicle 100 travels, such as long tail incident artificial intelligence (AI) data (for example, trip data of a vehicle in which an autonomous driving control scheme at a level 5 is implemented) or map information as information for predicting the risk.

In the above, the risk is calculated as a score related to an external environment, but an index serving as a score related to an external environment is not limited to the risk. For example, the MoPU 12 may calculate a score related to an external environment, separately from the risk, based on a movement direction, a speed, or the like of an object appearing in the image captured by the camera 30, and change the frame rate of the camera 30 according to the score. Hereinafter, a case where the MoPU 12 calculates a speed score that is a score related to a speed of an object appearing in the image captured by the camera 30 and changes the frame rate of the camera 30 according to the speed score will be described. As an example, the speed score is set to be higher as the speed of the object is higher, and is set to be lower as the speed of the object is lower. Then, the MoPU 12 increases the frame rate of the camera 30 as the calculated speed score is higher, and decreases the frame rate of the camera 30 as the calculated speed score is lower. Therefore, the MoPU 12 changes the frame rate of the camera 30 to 1920 frames/second in a case where the calculated speed score becomes equal to or higher than the threshold value because the speed of the object is fast. Further, the MoPU 12 changes the frame rate of the camera 30 to 120 frames/second in a case where the calculated speed score is lower than the threshold value because the speed of the object is slow. Note that, in this case, similarly to the above, the control signal may be output to the radar 32 and the infrared camera 34 so as to acquire a radar signal and capture an infrared image using a numerical value corresponding to the changed frame rate of the camera 30.

Next, a case where the MoPU 12 calculates a direction score that is a score related to a movement direction of an object appearing in the image captured by the camera 30 and changes the frame rate of the camera 30 according to the direction score will be described. As an example, the direction score is set to be high when the movement direction of the object is a direction approaching the road, and is set to be low when the movement direction of the object is a direction away from the road. Then, the MoPU 12 increases the frame rate of the camera 30 as the calculated direction score is higher, and decreases the frame rate of the camera 30 as the calculated direction score is lower. Specifically, the MoPU 12 specifies the movement direction of the object by using AI or the like, and calculates the direction score based on the specified movement direction. Then, the MoPU 12 changes the frame rate of the camera 30 to 1920 frames/second in a case where the calculated direction score is equal to or higher than the threshold value because the movement direction of the object is a direction approaching the road. In addition, the MoPU 12 changes the frame rate of the camera 30 to 120 frames/second in a case where the calculated direction score is lower than the threshold value because the movement direction of the object is a direction away from the road. Note that, in this case, similarly to the above, the control signal may be output to the radar 32 and the infrared camera 34 so as to acquire a radar signal and capture an infrared image using a numerical value corresponding to the changed frame rate of the camera 30.

Further, the MoPU 12 may output the point information only for an object for which the calculated score related to the external environment is equal to or higher than a predetermined threshold value. In this case, for example, the MoPU 12 may determine whether or not to output the point information of the object according to the movement direction of the object appearing in the image captured by the camera 30. For example, the MoPU 12 may not output the point information of the object having a low influence on traveling of the vehicle 100. Specifically, the MoPU 12 calculates the movement direction of the object appearing in the image captured by the camera 30, and does not output the point information of the object such as a pedestrian moving away from the road. On the other hand, the MoPU 12 outputs the point information of the object approaching the road (for example, an object such as a pedestrian who is likely to jump out onto a road). With this configuration, according to the information processing device 10, it is not necessary to output the point information of the object having a low influence on the traveling of the vehicle 100.

Further, in the above description, the case where the MoPU 12 calculates the risk has been exemplified, but the disclosed technique is not limited to this form. For example, the central brain 15 may calculate a risk instead of the MoPU 12. In this case, the central brain 15 calculates a risk related to the movement of the vehicle 100, as the score related to the external environment of the vehicle 100, based on pieces of sensor information acquired from a plurality of types of sensors and the point information output from the MoPU 12. Then, the central brain 15 outputs, to the MoPU 12, an instruction to change the frame rate of the camera 30 according to the calculated risk.

Further, in the above description, the case where the MoPU 12 outputs the point information based on the image captured by the camera 30 has been exemplified, but the disclosed technique is not limited to this form. For example, the MoPU 12 may output the point information based on a radar signal and an infrared image instead of the image captured by the camera 30. The MoPU 12 can derive an x coordinate value and a y coordinate value of the object from an infrared image of the object captured by the infrared camera 34, similarly to the image captured by the camera 30. The radar 32 can acquire three-dimensional point cloud data of the object based on a radar signal. That is, the radar 32 can detect a coordinate of the object on the z-axis in the three-dimensional orthogonal coordinate system. Here, the z-axis is an axis along a depth direction of the object and a traveling direction of the vehicle 100, and hereinafter, a coordinate value on the z-axis is referred to as a "z coordinate value". In this case, based on a principle of a stereo camera, the MoPU 12 derives coordinate values of the object on the three coordinate axes (the x-axis, the y-axis, and the z-axis), as the point information, by combining an x coordinate value and a y coordinate value of the object captured by the infrared camera 34 at the same timing as the timing at which the radar 32 acquires three-dimensional point cloud data of the object, and a z coordinate value of the object indicated by the three-dimensional point cloud data. Then, the MoPU 12 outputs the derived point information to the central brain 15.

Further, in the above description, the case where the MoPU 12 derives the point information has been exemplified, but the disclosed technique is not limited to this form. For example, the central brain 15 may derive the point information instead of the MoPU 12. The central brain 15 derives the point information, for example, by combining pieces of information detected by the camera 30L, the camera 30R, the radar 32, and the infrared camera 34. As a specific example, the central brain 15 derives coordinate values of the object on the three coordinate axes (the x-axis, the y-axis, and the z-axis), as the point information, by performing triangulation based on the x coordinate value and the y coordinate value of the object captured by the camera 30L and the x coordinate value and the y coordinate value of the object captured by the camera 30R.

Further, in the above description, the case where the central brain 15 controls autonomous driving of the vehicle 100 based on the image and the label information output from the IPU 11 and the point information output from the MoPU 12 has been exemplified. However, the disclosed technique is not limited to this form. For example, the central brain 15 may control an operation of a robot based on the pieces of information output from the IPU 11 and the MoPU 12. The robot may be a humanoid smart robot that performs work instead of a human. In this case, the central brain 15 controls operations of arms, palms, fingers, feet, and the like of the robot based on the pieces of information output from the IPU 11 and the MoPU 12. Thereby, the robot is caused to perform an action such as grasping, gripping, holding, carrying, moving, transporting, throwing, kicking, and avoiding the object. In a case where the central brain 15 controls an operation of the robot, the IPU 11 and the MoPU 12 may be provided at positions of the right eye and the left eye of the robot. That is, the IPU 11 and the MoPU 12 for the right eye may be provided in the right eye, and the IPU 11 and the MoPU 12 for the left eye may be provided in the left eye.

(Third Embodiment)

Next, a third embodiment according to the present embodiment will be described while omitting or simplifying an overlapping portion with the above embodiment.

As an example, an information processing device 10 according to the third embodiment has the same configuration as the configuration of the first embodiment illustrated in Fig. 2.

The MoPU 12 according to the third embodiment outputs, as point information, coordinate values of at least two diagonal points that are vertices of a polygon surrounding a contour of the object recognized from an image captured by the separate camera. Similarly to the first embodiment, the coordinate values are an x coordinate value and a y coordinate value of the object in the three-dimensional orthogonal coordinate system.

Fig. 4 is an explanatory diagram illustrating an example of the point information output from the MoPU 12. Fig. 4 illustrates bounding boxes 21, 22, 23, and 24 obtained by surrounding a contour of each of four objects included in the image captured by the separate camera with a rectangle by the MoPU 12. Then, Fig. 4 illustrates a form in which the MoPU 12 outputs, as point information, coordinate values of two diagonal points that are vertexes of the rectangular bounding boxes 21, 22, 23, and 24 each of which surrounds the contour of the corresponding object. As described above, the MoPU 12 may recognize the object as an object having a certain size, rather than as a point.

Further, in a case where the object is captured as an object having a certain size, the MoPU 12 may output, as point information, coordinate values of a plurality of vertices of a polygon surrounding the contour of the object, instead of coordinate values of two diagonal points that are vertices of the polygon surrounding the contour of the object recognized from the image captured by the separate camera. For example, in the case of Fig. 4 as an example, the MoPU 12 may output, as point information, coordinate values of all four vertexes of the bounding boxes 21, 22, 23, and 24 in which the contour of the object is surrounded by a rectangle.

(Fourth Embodiment)

Next, a fourth embodiment according to the present embodiment will be described while omitting or simplifying an overlapping portion with the above embodiment.

As an example, an information processing device 10 according to the fourth embodiment has the same configuration as the configuration of the first embodiment illustrated in Fig. 2.

The vehicle 100 provided with the information processing device 10 according to the fourth embodiment includes a sensor including at least one of a radar, a LiDAR, a high-performance camera with high resolution, telephotography, ultra wide angle, 360-degrees rotation, a vision sensor, a sound sensor, an ultrasonic sensor, a vibration sensor, an infrared sensor, an ultraviolet sensor, a radio wave sensor, a temperature sensor, or a humidity sensor. Examples of the sensor information acquired from the sensor by the information processing device 10 include a movement of a center of gravity of a weight, detection of a material of a road, detection of an outside air temperature, detection of outside air humidity, detection of an inclination angle of a slope in vertical and lateral directions, detection of a frozen state and the moisture amount of a road, a material of each tire, a wear state of a tire, detection of a tire pressure, a road width, the presence or absence of overtaking prohibition, vehicle type information of oncoming vehicles and vehicles in front of or behind the vehicle, a cruising state of these vehicles, and a surrounding situation (birds, animals, soccer balls, accident vehicles, earthquakes, fires, wind, typhoons, heavy rain, light rain, snowstorm, fog, and the like). The sensor is an example of a "detection unit", and the sensor information is an example of "detection information".

The central brain 15 according to the fourth embodiment calculates a control variable for controlling autonomous driving of the vehicle 100 based on the sensor information detected by the sensor. The central brain 15 acquires sensor information every billionth of a second. Specifically, the central brain 15 calculates control variables for controlling a wheel speed and an inclination of each of the four wheels of the vehicle 100 and for controlling suspensions that support the wheels. Note that the inclination of the wheel includes both the inclination of the wheel with respect to an axis horizontal to the road and the inclination of the wheel with respect to an axis vertical to the road. In this case, the central brain 15 calculates 16 control variables. The 16 control variables are control variables for controlling the wheel speed of each of the four wheels, the inclination of each of the four wheels with respect to an axis horizontal to the road, the inclination of each of the four wheels with respect to an axis vertical to the road, and the suspensions that support each of the four wheels.

Then, the central brain 15 controls autonomous driving of the vehicle 100 based on the control variables calculated above, the point information output from the MoPU 12, and the label information output from the IPU 11. Specifically, the central brain 15 controls in-wheel motors provided in the four wheels based on the 16 control variables described above. Thereby, autonomous driving is performed by controlling the wheel speed and the inclination of each of the four wheels of the vehicle 100 and the suspensions that support each of the four wheels. In addition, the central brain 15 recognizes a position and a movement of an object that is present around the vehicle 100 and is recognized as to what the object is, based on the point information and the label information. The central brain 15 controls autonomous driving of the vehicle 100 so as to, for example, avoid collision with an object based on the recognized information. The central brain 15 controls autonomous driving of the vehicle 100 in this manner, and thus, for example, in a case where the vehicle 100 travels on a mountain road, it is possible to perform optimal steering in accordance with the mountain road. In addition, in a case where the vehicle 100 is to be parked in a parking lot, it is possible to perform traveling at an optimum angle in accordance with the parking lot.

Here, the central brain 15 may be capable of inferring the control variable from the sensor information and information that can be acquired from a server or the like (not illustrated) via a network by using machine learning, more specifically, deep learning. In other words, the central brain 15 can be configured by AI.

The central brain 15 can obtain the control variable by performing multivariate analysis (refer to, for example, Expression (2)) by an integration method as shown in the following Expression (1) using computing power (hereinafter, also referred to as "computing power for the level 6") that is computing power for the sensor information and the long-tail incident AI data every billionth of a second and is used to realize the level 6. More specifically, while obtaining an integral value of delta values for various ultra high resolution with the computing power for the level 6, each control variable is obtained at an edge level and in real time. Thus, a result (that is, each control variable) occurring in the next billionth of a second can be acquired with the highest probabilistic value. In order to realize multivariate analysis, for example, an integral value is input to a deep learning model (for example, a learned model obtained by performing deep learning on a neural network) of the central brain 15, the integral value being obtained by time-integrating a delta value (for example, a change value for a minute time period) of a function (in other words, a function indicating a behavior of each variable) capable of specifying each variable (for example, the sensor information and information that can be acquired via a network) such as air resistance, road resistance, road element (for example, garbage), and slip coefficient. The deep learning model of the central brain 15 outputs a control variable (for example, the control variable with the highest reliability (that is, an evaluation value)) corresponding to the input integral value. The output of the control variable is performed in units of billionths of a second.

[Formula 1]

$$\mathrm{v} = \int_a^b f(A)dt \qquad (1)$$

[Formula 2]

$$V_n = DL\big(f(A, B, C, D, \cdots, N)(dA_n/dt)\big) \qquad (2)$$

Note that, as an example, in Expression (1), "f(A)" is an expression in which a function indicating a behavior of each variable such as air resistance, road resistance, road element (for example, garbage), and a slip coefficient is expressed in a simplified manner. Further, as an example, Expression (1) is an expression indicating time integral v of "f(A)" from a timing a to a timing b. In Expression (2), DL represents deep learning (for example, a deep learning model optimized by performing deep learning on a neural network), $dA_n/dt$ represents a delta value of f(A, B, C, D, ···, N), A, B, C, D, ···, and N represent variables such as air resistance, road resistance, road element (for example, garbage), and a slip coefficient, f(A, B, C, D, ···, N) represents a function representing behaviors of A, B, C, D, ···, and N, and $V_n$ represents a value (control variable) output from a deep learning model optimized by performing deep learning on a neural network.

Note that, here, a form example in which an integral value obtained by time-integrating a delta value of a function is input to the deep learning model of the central brain 15 is described, but this is merely an example. For example, an integral value (for example, the result occurring in the next billionth of a second) obtained by time-integrating a delta value of a function indicating a behavior of each variable such as air resistance, road resistance, road element, or a slip coefficient may be inferred by the deep learning model of the central brain 15, and as an inference result, an integral value with the highest reliability (that is, the evaluation value) may be acquired by the central brain 15 every billionth of a second.

Further, here, a form example in which an integral value is input to the deep learning model or an integral value is output from the deep learning model is described, but this is merely an example. The technique of the present disclosure can be established without using an integral value. For example, at least one control variable may be inferred by a deep learning model optimized by performing deep learning on a neural network by using training data in which values corresponding to A, B, C, D, ···, and N are used as example data and values corresponding to at least one control variable (for example, a result occurring in the next billionth of a second) are used as correct answer data.

The control variable obtained by the central brain 15 can be further refined by increasing the number of times of deep learning. For example, a more accurate control variable can be calculated using enormous data and long tail incident AI data. The enormous data described above includes a rotation of a tire or a motor, a steering angle, a material of a road, weather, garbage, an influence during secondary curved deceleration, slip, steering and speed control for release/re-acquisition of balance, and the like.

(Fifth Embodiment)

Next, a fifth embodiment according to the present embodiment will be described while omitting or simplifying an overlapping portion with the above embodiment.

Fig. 5 is a third block diagram illustrating an example of a configuration of an information processing device 10. Note that Fig. 5 illustrates only a partial configuration of the information processing device 10.

As illustrated in Fig. 5, in the MoPU 12, a visible light image and an infrared image of an object captured by the camera 30 are respectively input to the core 17 at a frame rate of 100 frames/second or higher. The camera 30 includes a visible light camera 30A capable of capturing a visible light image of an object and an infrared camera 30B capable of capturing an infrared image of an object. Then, the core 17 outputs the point information to the central brain 15 based on at least one of the input visible light image or the input infrared image.

Here, in a case where the object can be identified from the visible light image of the object captured by the visible light camera 30A, the core 17 outputs the point information based on the visible light image. On the other hand, in a case where an object cannot be recognized from the visible light image due to a predetermined factor, the core 17 outputs the point information based on the infrared image of the object captured by the infrared camera 30B. For example, it is assumed that the core 17 cannot recognize an object from the visible light image due to an influence of darkness as a predetermined factor. In this case, the core 17 detects heat of the object by using the infrared camera 30B, and outputs the point information of the object based on the infrared image which is the detection result. Note that the present embodiment is not limited thereto, and the core 17 may output the point information based on the visible light image and the infrared image.

Further, the MoPU 12 synchronizes a timing at which the visible light camera 30A captures the visible light image with a timing at which the infrared camera 30B captures the infrared image. Specifically, the MoPU 12 outputs a control signal to the camera 30 so as to capture a visible light image and an infrared image at the same timing. Thereby, the number of images per second captured by the visible light camera 30A and the number of images per second captured by the infrared camera 30B are synchronized with each other (for example, 1920 frames/second).

(Sixth Embodiment)

Next, a sixth embodiment according to the present embodiment will be described while omitting or simplifying an overlapping portion with the above embodiment.

Fig. 6 is a fourth block diagram illustrating an example of a configuration of an information processing device 10. Note that Fig. 6 illustrates only a partial configuration of the information processing device 10.

As illustrated in Fig. 6, in the MoPU 12, the images of the object captured by the camera 30 and a radar signal are input to the core 17 at a frame rate of 100 frames/second or higher, the radar signal being a signal based on a reflected wave of an electromagnetic wave with which the object is irradiated by the radar 32 and which is reflected from the object. Then, the core 17 outputs the point information to the central brain 15 based on the input images of the object and the input radar signal. The core 17 can derive the x coordinate value and the y coordinate value of the object from the input images of the object. As described above, the radar 32 can acquire the three-dimensional point cloud data of the object based on the radar signal and detect the coordinate of the object on the z-axis in the three-dimensional orthogonal coordinate system. In this case, based on a principle of a stereo camera, the core 17 derives coordinate values of the object on the three coordinate axes (the x-axis, the y-axis, and the z-axis), as the point information, by combining an x coordinate value and a y coordinate value of the object captured by the camera 30 at the same timing as a timing at which the radar 32 acquires three-dimensional point cloud data of the object, and a z coordinate value of the object indicated by the three-dimensional point cloud data. Note that the images of the object which are input to the core 17 may include at least one of a visible light image or an infrared image.

In addition, the MoPU 12 synchronizes a timing at which the image is captured by the camera 30 with a timing at which the radar 32 acquires the three-dimensional point cloud data of the object based on the radar signal. Specifically, the MoPU 12 outputs a control signal to the camera 30 and the radar 32 such that the camera 30 captures images and the radar 32 acquires three-dimensional point cloud data of the object at the same timing. Thereby, the number of images per second captured by the camera 30 is synchronized with the number of pieces of three-dimensional point cloud data per second acquired by the radar 32 (for example, 1920 frames/second). In this manner, the number of images per second captured by the camera 30 and the number of pieces of three-dimensional point cloud data per second acquired by the radar 32 are larger than the frame rate of the ultra-high-resolution camera included in the IPU 11, that is, the number of images per second captured by the ultra-high-resolution camera.

(Seventh Embodiment)

Next, a seventh embodiment according to the present embodiment will be described while omitting or simplifying an overlapping portion with the above embodiment.

As an example, an information processing device 10 according to the seventh embodiment has the same configuration as the configuration of the first embodiment illustrated in Fig. 2.

The central brain 15 according to the seventh embodiment associates the point information, which is output from the MoPU 12 at the same timing as the timing at which the IPU 11 outputs the label information, with the label information. Further, after the point information and the label information are associated with each other, in a case where new point information is output from the MoPU 12, the central brain 15 also associates the new point information with the label information. The new point information is point information of the same object as the object indicated by the point information associated with the label information, and is one or a plurality of pieces of point information from when association is performed to when the next label information is output. In the seventh embodiment, similarly to the above embodiment, the frame rate of the separate camera provided with the MoPU 12 is 100 frames/second or higher (for example, 1920 frames/second), and the frame rate of the ultra-high-resolution camera provided with the IPU 11 is 10 frames/second.

Fig. 7 is an explanatory diagram illustrating an example of association between point information and label information. In the following description, the number of pieces of point information per second that are output from the MoPU 12 is referred to as "output rate of point information", and the number of pieces of label information per second that are output from the IPU 11 is referred to as "output rate of label information".

Fig. 7 illustrates a time series of the output rate of the point information P4 of the object B14. The output rate of the point information P4 for the object B14 is 1920 frames/second. Further, the point information P4 moves from right to left in the drawing. The output rate of the label information for the object B14 is 10 frames/second, which is lower than the output rate of the point information P4.

First, at a timing t0, the label information of the object B14 is not output from the IPU 11. Therefore, at the timing t0, the central brain 15 recognizes the coordinate values (position information) of the object B14 based on the point information P4, but does not recognize what the object B14 is.

Next, at a timing t1, the label information of the object B14 is output from the IPU 11. Therefore, the central brain 15 derives label information "person" of the object B14 based on the label information. Then, the central brain 15 associates the label information "person" derived at the timing t1 with the coordinate value (position information) of the point information P4 output from the MoPU 12 at the timing t1.

Thereby, at the timing t1, the central brain 15 recognizes the coordinate values (position information) of the object B14 based on the point information P4, and recognizes what the object B14 is.

In Fig. 7, it is assumed that a timing at which the next label information of the object B14 is output from the IPU 11 is a timing t2. Therefore, at the timing t2, the central brain 15 derives label information "person" of the object B14 based on the label information output from the IPU 11. Then, the central brain 15 associates the label information "person" derived at the timing t2 with the coordinate value (position information) of the point information P4 output from the MoPU 12 at the timing t2.

Here, due to the frame rate difference between the separate camera provided with the MoPU 12 and the ultra-high-resolution camera provided with the IPU 11, in a period from the timing t1 to the timing t2, the point information P4 of the object B14 is acquired by the central brain 15. On the other hand, the label information is not acquired by the central brain 15. In this case, the central brain 15 associates the point information P4 acquired in the period from the timing t1 to the timing t2 with the label information "person" which is associated with the point information P4 at the immediately preceding timing t1. Here, the point information P4 acquired by the central brain 15 in the period from the timing t1 to the timing t2 is an example of "new point information". In the example illustrated in Fig. 7, since a plurality of pieces of point information P4 are output from the MoPU 12 in the period from the timing t1 to the timing t2, the central brain 15 acquires a plurality of pieces of point information P4. Therefore, in the example illustrated in Fig. 7, the central brain 15 associates any of the plurality of pieces of point information P4 acquired in the period from the timing t1 to the timing t2 with the label information "person" associated at the immediately preceding timing t1. Note that, unlike the example illustrated in Fig. 7, in a case where one piece of point information P4 is output from the MoPU 12 in the period from the timing t1 to the timing t2, the central brain 15 associates the one piece of point information P4 with the label information "person" associated at the immediately preceding timing t1.

Here, in the central brain 15, even in a case where there is a period in which the type of the object of which the movement is being tracked is uncertain, the point information of the object is continuously output at a high frame rate, and thus, there is a low risk of losing tracking of the coordinate value (position information) of the object. Therefore, in a case where association between the point information and the label information is performed once, the central brain 15 can presumptively assign the label information at the immediately preceding timing, for the point information acquired before the next label information is acquired.

(Eighth Embodiment)

Next, an eighth embodiment according to the present embodiment will be described while omitting or simplifying an overlapping portion with the above embodiment.

When the information processing device 10 that controls autonomous driving of the vehicle 100 performs advanced arithmetic processing, heat generation is a problem. Therefore, the eighth embodiment provides a vehicle 100 having a cooling function for the information processing device 10.

Fig. 8 is an explanatory diagram illustrating a schematic configuration of the vehicle 100. As illustrated in Fig. 8, an information processing device 10, a cooling execution device 110, and a cooling unit 120 are provided in the vehicle 100.

The information processing device 10 according to the eighth embodiment is a device that controls autonomous driving of the vehicle 100, and has, as an example, the same configuration as the configuration of the first embodiment illustrated in Fig. 2. The cooling execution device 110 acquires the detection result of the object by the information processing device 10, and causes the cooling unit 120 to cool the information processing device 10 based on the detection result. The cooling unit 120 cools the information processing device 10 by using at least one cooling means such as air cooling means, water cooling means, and liquid nitrogen cooling means. In the following description, a cooling target in the information processing device 10 is described as the central brain 15 (specifically, the CPU 14 included in the central brain 15) that controls autonomous driving of the vehicle 100, but the cooling target is not limited thereto.

The information processing device 10 and the cooling execution device 110 are communicably connected via a network (not illustrated). The network may be any of a vehicle network, the Internet, a local area network (LAN), and a mobile communication network. The mobile communication network may conform to any of a 5th generation (5G) communication scheme, a long term evolution (LTE) communication scheme, a 3rd generation (3G) communication scheme, and a 6th generation (6G) or later communication scheme.

Fig. 9 is a block diagram illustrating an example of a functional configuration of the cooling execution device 110. As illustrated in Fig. 9, the cooling execution device 110 includes an acquisition unit 112, an execution unit 114, and a prediction unit 116 as functional components.

The acquisition unit 112 acquires an object detection result by the information processing device 10. For example, the acquisition unit 112 acquires the point information of the object output from the MoPU 12, as the detection result.

Based on the object detection result acquired by the acquisition unit 112, the execution unit 114 executes cooling for the central brain 15.

For example, in a case where a moving object is recognized based on the point information of the object that is output from the MoPU 12, the execution unit 114 causes the cooling unit 120 to start cooling for the central brain 15.

Note that the execution unit 114 is not limited to causing the cooling unit 120 to execute cooling for the central brain 15 based on the object detection result, and may cause the cooling unit 120 to execute cooling for the central brain 15 based on a prediction result of an operation status of the information processing device 10.

Here, the prediction unit 116 predicts an operation status of the information processing device 10, specifically, the central brain 15 based on the object detection result acquired by the acquisition unit 112. For example, the prediction unit 116 acquires a learning model stored in a predetermined storage area. Then, the prediction unit 116 predicts an operation status of the central brain 15 by inputting the point information of the object that is output from the MoPU 12 and is acquired by the acquisition unit 112 into the learning model. Here, the learning model outputs a status and a change amount of computing power of the central brain 15, as the operation status. Further, the prediction unit 116 may predict and output a temperature change of the information processing device 10, specifically, the central brain 15, together with the operation status. For example, the prediction unit 116 predicts a temperature change of the central brain 15 based on the number of pieces of point information of the object that are output from the MoPU 12 and are acquired by the acquisition unit 112. In this case, the prediction unit 116 predicts that the temperature change increases as the number of pieces of point information increases, and predicts that the temperature change decreases as the number of pieces of point information decreases.

In the above case, the execution unit 114 causes the cooling unit 120 to start cooling for the central brain 15 based on the prediction result of the operation status of the central brain 15 by the prediction unit 116. For example, in a case where the status and the change amount of the computing power of the central brain 15 that are predicted as the operation status exceed a predetermined threshold value, the execution unit 114 causes the cooling unit 120 to start cooling. Further, in a case where the temperature based on the temperature change of the central brain 15 that is predicted as the operation status exceeds a predetermined threshold value, the execution unit 114 causes the cooling unit 120 to start cooling.

Further, the execution unit 114 may cause the cooling unit 120 to execute cooling for the central brain 15 by using cooling means corresponding to the prediction result of the temperature change of the central brain 15 by the prediction unit 116. For example, the execution unit 114 may cause the cooling unit 120 to execute cooling by using a larger number of cooling means as the predicted temperature of the central brain 15 is higher. As a specific example, in a case where it is predicted that the temperature of the central brain 15 exceeds a first threshold value, the execution unit 114 causes the cooling unit 120 to execute cooling by using one piece of cooling means. On the other hand, in a case where it is predicted that the temperature of the central brain 15 exceeds a second threshold value higher than the first threshold value, the execution unit 114 causes the cooling unit 120 to execute cooling by using a plurality of pieces of cooling means.

Further, the execution unit 114 may cause the cooling unit 120 to execute cooling for the central brain 15 by using stronger cooling means as the predicted temperature of the central brain 15 is higher. For example, in a case where it is predicted that the temperature of the central brain 15 exceeds the first threshold value, the execution unit 114 causes the cooling unit 120 to execute cooling by using air cooling means. Further, in a case where it is predicted that the temperature of the central brain 15 exceeds the second threshold value higher than the first threshold value, the execution unit 114 causes the cooling unit 120 to execute cooling by using water cooling means. Further, in a case where it is predicted that the temperature of the central brain 15 exceeds a third threshold value higher than the second threshold value, the execution unit 114 causes the cooling unit 120 to execute cooling by using liquid nitrogen cooling means.

Further, the execution unit 114 may determine the cooling means to be used for cooling based on the number of pieces of point information of the object that are output from the MoPU 12 and are acquired by the acquisition unit 112. In this case, the execution unit 114 may cause the cooling unit 120 to execute cooling for the central brain 15 by using stronger cooling means as the number of pieces of point information is larger. For example, in a case where the number of pieces of point information exceeds a first threshold value, the execution unit 114 causes the cooling unit 120 to execute cooling by using air cooling means. In addition, in a case where the number of pieces of point information exceeds a second threshold value higher than the first threshold value, the execution unit 114 causes the cooling unit 120 to execute cooling by using water cooling means. Further, in a case where the number of pieces of point information exceeds a third threshold value higher than the second threshold value, the execution unit 114 causes the cooling unit 120 to execute cooling by using liquid nitrogen cooling means.

On the other hand, there is a case where a moving object present on a road is detected as a trigger for an operation of the central brain 15. For example, in a case where a moving object present on a road is detected when the vehicle 100 is performing autonomous driving, the central brain 15 may perform arithmetic processing for controlling the vehicle 100 with respect to the object. As described above, heat generation when the central brain 15 that controls autonomous driving of the vehicle 100 performs advanced arithmetic processing is a problem. Therefore, the cooling execution device 110 according to the eighth embodiment predicts heat dissipation of the central brain 15 based on the object detection result by the information processing device 10, and causes the cooling unit 120 to execute cooling for the central brain 15 before or simultaneously with start of heat dissipation. Thereby, the central brain 15 is prevented from reaching a high temperature during the autonomous driving of the vehicle 100, and advanced calculation during the autonomous driving can be performed.

(Ninth Embodiment)

Next, a ninth embodiment according to the present embodiment will be described while omitting or simplifying an overlapping portion with the above embodiment.

The MoPU 12 included in the information processing device 10 according to the ninth embodiment derives a z coordinate value of an object, as point information, from an image of the object that is captured by the camera 30. Hereinafter, each form of the information processing device 10 according to the ninth embodiment will be sequentially described.

The information processing device 10 according to a first form has the same configuration as the configuration of the second embodiment illustrated in Fig. 3.

In the first form, the MoPU 12 derives the z coordinate value of the object, as the point information, from the images of the object that are captured by the plurality of cameras 30, specifically, the camera 30L and the camera 30R. As described above, in a case where one MoPU 12 is used, the x coordinate value and the y coordinate value of the object can be derived as the point information. Here, in a case where two MoPUs 12 are used, the z coordinate value of the object can be derived as the point information based on the images of the object that are captured by the two cameras 30 using the principle of the stereo camera. Therefore, in the first form, the z coordinate value of the object is derived as the point information based on the images of the object that are respectively captured by the camera 30L of the MoPU 12L and the camera 30R of the MoPU 12R using the principle of the stereo camera.

The information processing device 10 according to a second form has the same configuration as the configuration of the second embodiment illustrated in Fig. 3.

In the second form, the MoPU 12 derives an x coordinate value, a y coordinate value, and a z coordinate value of the object, as point information, from the images of the object that are captured by the camera 30 and the radar signal based on the reflected wave of the electromagnetic wave with which the object is irradiated by the radar 32 and which is reflected from the object. As described above, the radar 32 can acquire the three-dimensional point cloud data of the object based on the radar signal. That is, the radar 32 can detect a coordinate of the object on the z-axis in the three-dimensional orthogonal coordinate system. In this case, the MoPU 12 derives, as the point information, the coordinate values of the object on the three coordinate axes using the principle of the stereo camera. At this time, the coordinate values of the object on the three coordinate axes are derived by combining the x coordinate value and the y coordinate value of the object captured by the camera 30 at the same timing as the timing when the radar 32 acquires the three-dimensional point cloud data of the object and the z coordinate value of the object indicated by the three-dimensional point cloud data.

The information processing device 10 according to a third form has a configuration illustrated in Fig. 10. Fig. 10 is a fifth block diagram illustrating an example of a configuration of the information processing device 10. Note that Fig. 10 illustrates only a partial configuration of the information processing device 10.

In the third form, the MoPU 12 derives the z coordinate value of the object, as the point information, from the images of the object that are captured by the camera 30 and a result obtained by capturing structured light with which the object is irradiated by an irradiation device 130.

As illustrated in Fig. 10, in the MoPU 12, the following information is input to the core 17 at a frame rate of 100 frames/second or higher. That is, the images of the object that are captured by the camera 30 and distortion information indicating a distortion of a pattern of the structured light are input to the core 17, the distortion information being a result obtained by capturing, by the camera 140, the structured light with which the object is irradiated by the irradiation device 130. Then, the core 17 outputs the point information to the central brain 15 based on the input images of the object and the input distortion information.

Here, as one of methods for identifying a three-dimensional position or a shape of the object, there is a structured light method. The structured light method is a method of irradiating an object with structured light in a pattern of a dot shape and acquiring depth information from a distortion of the pattern. The structured light method is disclosed, for example, in the reference document (http://ex-press.jp/wp-content/uploads/2018/10/018_teledyne_3rd.pdf).

The irradiation device 130 illustrated in Fig. 10 irradiates an object with structured light. In addition, the camera 140 captures an image of the structured light with which the object is irradiated by the irradiation device 130. Then, the camera 140 outputs distortion information based on a distortion of a captured pattern of the structured light to the core 17.

Here, the MoPU 12 synchronizes a timing at which the camera 30 captures an image of the object with a timing at which the camera 140 captures an image of the structured light. Specifically, the MoPU 12 outputs a control signal to the camera 30 and the camera 140 such that capturing of the images can be performed at the same timing. Thereby, the number of images per second that are captured by the camera 30 is synchronized with the number of images per second that are captured by the camera 140 (for example, 1920 frames/second). In this manner, the number of images per second that are captured by the camera 30 and the number of images per second that are captured by the camera 140 are larger than the frame rate of the ultra-high-resolution camera provided with the IPU 11, that is, the number of images per second that are captured by the ultra-high-resolution camera.

Then, the core 17 derives the z coordinate value of the object as the point information by combining the x coordinate value and the y coordinate value of the object captured by the camera 30 at the same timing as the timing at which the image of the structured light is captured by the camera 140 and the distortion information based on the distortion of the pattern of the structured light.

The information processing device 10 according to a fourth form has a configuration illustrated in Fig. 11. Fig. 11 is a sixth block diagram illustrating an example of a configuration of the information processing device 10. Note that Fig. 11 illustrates only a partial configuration of the information processing device 10.

The block diagram illustrated in Fig. 11 is obtained by adding the Lidar sensor 18 to the configuration of the block diagram illustrated in Fig. 2. The Lidar sensor 18 is a sensor that acquires point cloud data including an object present in a three-dimensional space and a road surface on which the vehicle 100 is traveling. The information processing device 10 can derive position information of the object in a depth direction, that is, the z coordinate value of the object by using the point cloud data acquired by the Lidar sensor 18. Note that it is assumed that the point cloud data acquired by the Lidar sensor 18 is acquired at intervals longer than the intervals at which the x coordinate value and the y coordinate value of the object are output from the MoPU 12. Further, the MoPU 12 is provided with a camera 30 similarly to the above-described form of the ninth embodiment.

In the fourth form, using the principle of the stereo camera, the MoPU 12 derives, as the point information, coordinate values of the object on the three coordinate axes by combining the x coordinate value and the y coordinate value of the object captured by the camera 30 at the same timing as the timing at which the Lidar sensor 18 acquires the point cloud data of the object and the z coordinate value of the object indicated by the point cloud data.

Here, in the fourth form, the MoPU 12 derives, as the point information, the z coordinate value of the object at a timing t+1, from the x coordinate value, the y coordinate value, and the z coordinate value of the object at the timing t and the x coordinate value and the y coordinate value of the object at a timing next to the timing t (for example, a timing t+1). The timing t is an example of a "first timing", and the timing t+1 is an example of a "second timing". In the fourth form, the z coordinate value of the object at the timing t+1 is derived by using shape information, that is, geometry. This will be described in detail below.

Fig. 12 is a diagram schematically illustrating detection of a coordinate of an object in a time series. In Fig. 12, J indicates a position of an object represented by a rectangle, and the position of the object moves in time series from J1 to J2. In Fig. 12, the coordinate value of the object at the timing t at which the object is located at J1 is (x1, y1, z1), and the coordinate value of the object at the timing t+1 at which the object is located at J2 is (x2, y2, z2).

First, the timing t will be described.

The MoPU 12 derives an x coordinate value and a y coordinate value of the object, from the images of the object that are captured by the camera 30. Subsequently, the MoPU 12 derives a three-dimensional coordinate value (x1, y1, z1) of the object at the timing t by integrating the z coordinate value of the object indicated by the point cloud data acquired from the Lidar sensor 18 and the x coordinate value and the y coordinate value of the object.

Next, the timing t+1 will be described.

The MoPU 12 derives the z coordinate value of the object at the timing t+1 based on geometry of the space and a change in the x coordinate value and the y coordinate value of the object from the timing t to the timing t+1. The geometry of the space includes a shape of a road surface obtained from the images captured by the ultra-high-resolution camera provided with the IPU 11 and the point cloud data of the Lidar sensor 18, and a shape of the vehicle 100.

The geometry indicating the shape of the road surface is generated in advance at the timing t. The MoPU 12 can simulate a case where the vehicle 100 travels on the road surface by using geometry indicating the shape of the vehicle 100 together with the geometry indicating the shape of the road surface, and can estimate a movement amount of the object on each axis of the x-axis, the y-axis, and the z axis.

Therefore, the MoPU 12 derives the x coordinate value and the y coordinate value of the object at the timing t+1 from the images of the object that are captured by the camera 30. The MoPU 12 can derive the z coordinate value of the object at the timing t+1 by calculating, from the simulation, the movement amount of the object on the z axis when the object changes from the x coordinate value and the y coordinate value (x1, y1) at the timing t to the x coordinate value and the y coordinate value (x2, y2) at the timing t+1. Then, the MoPU 12 derives a three-dimensional coordinate value (x2, y2, z2) of the object at the timing t+1 by integrating the x coordinate value, the y coordinate value, and the z coordinate value.

As illustrated in Fig. 12, since the object moves in the depth direction together with the movement in plane coordinates (that is, the x-axis and the y-axis), it is also necessary to detect a movement in the z-axis direction in order to control autonomous driving of the vehicle 100 with high accuracy. Here, the MoPU 12 may not be able to acquire the z coordinate value of the object that can be derived from the point cloud data of the Lidar sensor 18 as quickly as the x coordinate value and the y coordinate value of the object. Therefore, in the fourth form, the MoPU 12 derives the z coordinate value of the object at the timing t+1, from the x coordinate value, the y coordinate value, and the z coordinate value of the object at the timing t and the x coordinate value and the y coordinate value of the object at the timing t+1. Thereby, according to the information processing device 10 according to the fourth form, the MoPU 12 can realize two-dimensional movement detection by high-speed frame shot and three-dimensional movement detection with high performance and low-capacity data.

Further, in the above description, the case where the MoPU 12 derives the z coordinate value of the object, as the point information, from the images of the object that are captured by the camera 30 has been exemplified, but the disclosed technique is not limited to this form. For example, instead of the MoPU 12, the central brain 15 may derive the z coordinate value of the object as the point information. In this case, the central brain 15 derives the z coordinate value of the object as the point information by performing the processing executed by the MoPU 12 in the above description on the images of the object that are captured by the camera 30. As an example, the central brain 15 derives the z coordinate value of the object, as point information, from images of the object that are captured by the plurality of cameras 30, specifically, the camera 30L and the camera 30R. In this case, using the principle of the stereo camera, the central brain 15 derives the z coordinate value of the object as the point information based on the images of the object that are captured by the camera 30L of the MoPU 12L and the camera 30R of the MoPU 12R.

(Tenth Embodiment)

Next, a tenth embodiment according to the present embodiment will be described while omitting or simplifying an overlapping portion with the above embodiment.

Fig. 13 is a seventh block diagram illustrating an example of a configuration of an information processing device 10. Note that Fig. 13 illustrates only a partial configuration of the information processing device 10.

As illustrated in Fig. 13, in the MoPU 12, an image of an object (hereinafter, may be referred to as an "event image") captured by an event camera 30C is input to the core 17. Then, the core 17 outputs the point information to the central brain 15 based on the input event image. Note that the event camera is disclosed in, for example, the reference document (https://dendenblog.xyz/event-based-camera/).

Fig. 14 is an explanatory diagram for explaining an image (event image) of an object captured by the event camera 30C. Fig. 14(A) is a diagram illustrating an object to be captured by the event camera 30C. Fig. 14(B) is a diagram illustrating an example of an event image. Fig. 14(C) is a diagram illustrating an example in which a center of gravity of a difference portion between an image captured at the current timing and an image captured at the previous timing, which is represented by an event image, is calculated as point information. In the event image, a difference portion between the image captured at the current timing and the image captured at the previous timing is extracted as a point. Therefore, in a case where the event camera 30C is used, for example, as illustrated in Fig. 14(B), points at each movement portion in the person area illustrated in Fig. 14(A) are extracted.

On the other hand, as illustrated in Fig. 14(C), after extracting a person who is an object, the core 17 extracts coordinates (for example, only one point) of a feature point representing the person area. Thereby, the amount of data transferred to the central brain 15 and the memory 16 can be suppressed. In the event image, a person that is an object can be extracted at an arbitrary frame rate. Thus, in the case of the event camera 30C, the event image can be extracted at a frame rate equal to or higher than the maximum frame rate (for example, 1920 frames/second) of the camera 30 provided with the MoPU 12 in the above embodiment, and the point information of the object can be recognized with high accuracy.

Note that, in the information processing device 10 according to the tenth embodiment, the MoPU 12 may include a visible light camera 30A in addition to the event camera 30C, similarly to the above-described embodiment. In this case, in the MoPU 12, the visible light image of the object that is captured by the visible light camera 30A and the event image are input to the core 17. Then, the core 17 outputs the point information to the central brain 15 based on at least one of the input visible light image or the input event image.

For example, in a case where the object can be identified from the visible light image of the object that is captured by the visible light camera 30A, the core 17 outputs the point information based on the visible light image. On the other hand, in a case where an object cannot be recognized from the visible light image due to a predetermined factor, the core 17 outputs the point information based on the event image. The predetermined factor includes at least one of a case where the movement speed of the object is equal to or higher than a predetermined value or a case where a change in the light amount of ambient light per unit time is equal to or larger than a predetermined value. For example, in a case where the object is moving too fast and the object cannot be recognized from the visible light image, the core 17 identifies the object based on the event image, and outputs the x coordinate value and the y coordinate value of the object as the point information. Further, in a case where an object cannot be recognized from the visible light image due to a sudden change in the amount of ambient light such as backlight, the core 17 identifies the object based on the event image, and outputs the x coordinate value and the y coordinate value of the object as point information. With this configuration, according to the information processing device 10, it is possible to selectively use the camera 30 that captures an object according to a predetermined factor.

Fig. 15 schematically illustrates an example of a hardware configuration of a computer 1200 that functions as the information processing device 10 or a cooling execution device 110. A program installed in the computer 1200 can cause the computer 1200 to function as one or more "units" of the device according to the present embodiment, or cause the computer 1200 to execute operations or one or more "units" associated with the device according to the present embodiment, and/or cause the computer 1200 to execute a process according to the present embodiment or a stage of the process. Such programs may be executed by the CPU 1212 to cause the computer 1200 to perform certain operations associated with some or all of the blocks in the flowcharts and block diagrams described herein.

The computer 1200 according to the present embodiment includes a CPU 1212, a RAM 1214, and a graphic controller 1216, which are mutually connected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, and thus, each unit is controlled by the CPU 1212. The graphics controller 1216 acquires image data generated by the CPU 1212 and stores the image data in a frame buffer or the like provided in the RAM 1214 or in the graphics controller 1216 itself, and causes the image data to be displayed on a display device 1218.

The communication interface 1222 performs communication with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads the program and data from the IC card and/or writes the program and data in the IC card.

The ROM 1230 stores a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, is installed in any one of the storage device 1224, the RAM 1214, and the ROM 1230, which are also an example of a computer-readable storage medium, and is executed by the CPU 1212. The information processing described in these programs is read by the computer 1200 and provides cooperation between the programs and the various types of hardware resources. The device or the method may be configured by implementing operation or processing of information according to use of the computer 1200.

For example, in a case where communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

In addition, the CPU 1212 may cause the RAM 1214 to read all or a necessary portion of a file or a database stored in an external recording medium such as the storage device 1224, a DVD drive (DVD-ROM), an IC card, or the like, and may execute various types of processing on data on the RAM 1214. Next, the CPU 1212 may rewrite the processed data in the external recording medium.

Various types of information such as various types of programs, data, tables, and databases may be stored in a recording medium and may be subjected to information processing. The CPU 1212 may execute various types of processing on the data read from the RAM 1214, including various types of operations, information processing, condition determination, conditional branching, unconditional branching, information retrieval/replacement, and the like, which are described throughout the present disclosure and are specified by a command sequence of a program, and may rewrite the results in the RAM 1214. In addition, the CPU 1212 may search for information in a file, a database, or the like in the recording medium. For example, in a case where a plurality of entries, each of which has an attribute value of a first attribute associated with an attribute value of a second attribute, are stored in the recording medium, the CPU 1212 may search for an entry in which the attribute value of the first attribute matches a specified condition from the plurality of entries, read the attribute value of the second attribute stored in the entry, and acquire the attribute value of the second attribute associated with the first attribute satisfying the predetermined condition.

The program or the software module described above may be stored in a computer-readable storage medium on the computer 1200 or in the vicinity of the computer 1200. Further, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the embodiments may represent stages of a process in which operation is performed or "units" of a device that are responsible for performing the operation. The certain stages and the "units" may be implemented by dedicated circuitry, programmable circuitry provided with computer-readable instructions stored on a computer-readable storage medium, and/or a processor provided with computer-readable instructions stored on a computer-readable storage medium. The dedicated circuits may include digital and/or analog hardware circuits, and may include integrated circuits (ICs) and/or discrete circuits. The programmable circuit may include reconfigurable hardware circuits, such as field programmable gate arrays (FPGAs) and programmable logic arrays (PLAs), including, for example, AND, OR, XOR, NAND, NOR, and other logical operations, flip-flops, registers, and memory elements.

The computer-readable storage medium may include any tangible device capable of storing instructions to be executed by a suitable device. Thus, the computer-readable storage medium including instructions stored thereon includes a manufacture article including instructions that may be executed to create means for performing the operations specified in the flowcharts or the block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a Floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, and the like.

The computer-readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided to a processor of a general purpose computer, a special purpose computer, or another programmable data processing device, or to a programmable circuit, either locally or over a local area network (LAN) or a wide area network (WAN) such as the Internet. The processor of the general purpose computer, the special purpose computer, or the other programmable data processing device, or the programmable circuit is caused to execute the computer-readable instructions to generate means for allowing the processor or the programmable circuit to perform the operations specified in the flowcharts or the block diagrams. Examples of the processor include a computer processor, a processing unit, a microprocessor, a digital signal processor, a controller, a microcontroller, and the like.

Although the present invention has been described using the embodiments, the technical scope of the present invention is not limited to the scope described in the above embodiments. It is apparent to those skilled in the art that various modifications or improvements can be made to the above embodiments. It is apparent from the description of the claims that forms to which such modifications or improvements are added can also be included in the technical scope of the present invention.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Although, in the operation flow in the claims, the specification, and the drawings, the operations are described using "first", "next", and the like for convenience, this does not mean that it is necessary to perform the operations in that order.

In the above embodiments, the processing to be executed by each processor (for example, the IPU 11, the MoPU 12, and the central brain 15) is merely an example, and the processor that executes each processing is not limited. For example, the processing executed by the MoPU 12 in the above embodiment may be executed by the central brain 15 instead of the MoPU 12, or may be executed by a processor other than the IPU 11, the MoPU 12, and the central brain 15. The technique of the present disclosure may be applied to a program product.

The disclosure of Japanese Patent Application No. 2023-179071 is entirely incorporated herein by reference.

All documents, patent applications, and technical standards described in the specification are incorporated herein by reference to the same extent as if each of the documents, the patent applications, and the technical standards is specifically and individually described to be incorporated by reference.

## Claims

**1.** An information processing device comprising:

a first processor that outputs point information obtained by recognizing a captured object as a point from an image of the object captured by a first camera provided in a vehicle;
a second processor that outputs identification information for identifying the captured object from an image of the object captured by a second camera which is provided in the vehicle and faces a direction corresponding to a direction of the first camera; and
a third processor that associates the point information output from the first processor with the identification information output from the second processor, wherein
the third processor further performs driving control of the vehicle based on a result obtained by simulating a movement of the object on a digital map on which the point information and the identification information which are associated with each other are plotted.

**2.** The information processing device according to claim 1, wherein

the first processor outputs the point information including movement information indicating a movement of the object,
a collision risk between the vehicle and the object is predicted in the simulation by using each movement pattern of the object that is determined according to the movement information included in the point information and the identification information, and
the third processor performs driving control of the vehicle based on the collision risk predicted in the simulation.

**3.** The information processing device according to claim 2, wherein

the third processor performs driving control of the vehicle so as to avoid a collision in which the collision risk predicted in the simulation is equal to or higher than a threshold value, and
performs driving control of the vehicle such that traffic congestion of subsequent vehicles does not occur in a case where all of the collision risks predicted in the simulation are lower than the threshold value.

**4.** The information processing device according to claim 1, wherein
in the simulation, a collision risk between the vehicle and the object is predicted by using a point representing the object or a polygon surrounding a contour of the object.

**5.** An information processing method executed by a computer, the method comprising:

outputting point information obtained by recognizing a captured object as a point from an image of the object captured by a first camera provided in a vehicle;
outputting identification information for identifying the captured object from an image of the object captured by a second camera which is provided in the vehicle and faces a direction corresponding to a direction of the first camera;
associating the point information which is output with the identification information which is output; and
performing driving control of the vehicle based on a result obtained by simulating a movement of the object on a digital map on which the point information and the identification information which are associated with each other are plotted.

**6.** An information processing program for causing a computer to execute processing comprising:

outputting point information obtained by recognizing a captured object as a point from an image of the object captured by a first camera provided in a vehicle;
outputting identification information for identifying the captured object from an image of the object captured by a second camera which is provided in the vehicle and faces a direction corresponding to a direction of the first camera;
associating the point information which is output with the identification information which is output; and
performing driving control of the vehicle based on a result obtained by simulating a movement of the object on a digital map on which the point information and the identification information which are associated with each other are plotted.

FIG.1A

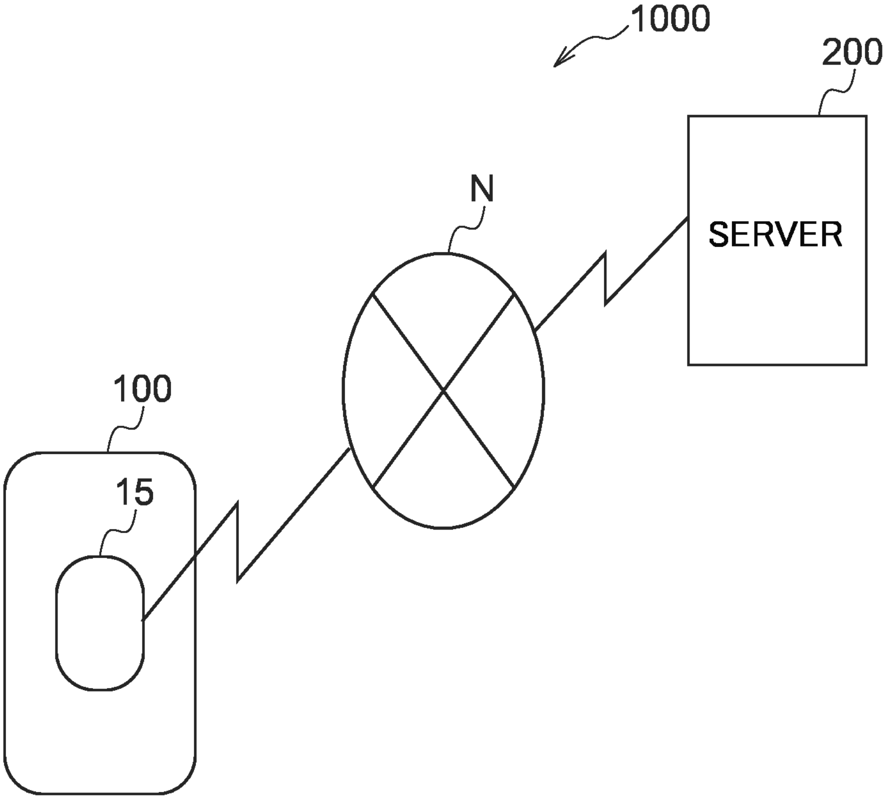

FIG.1B

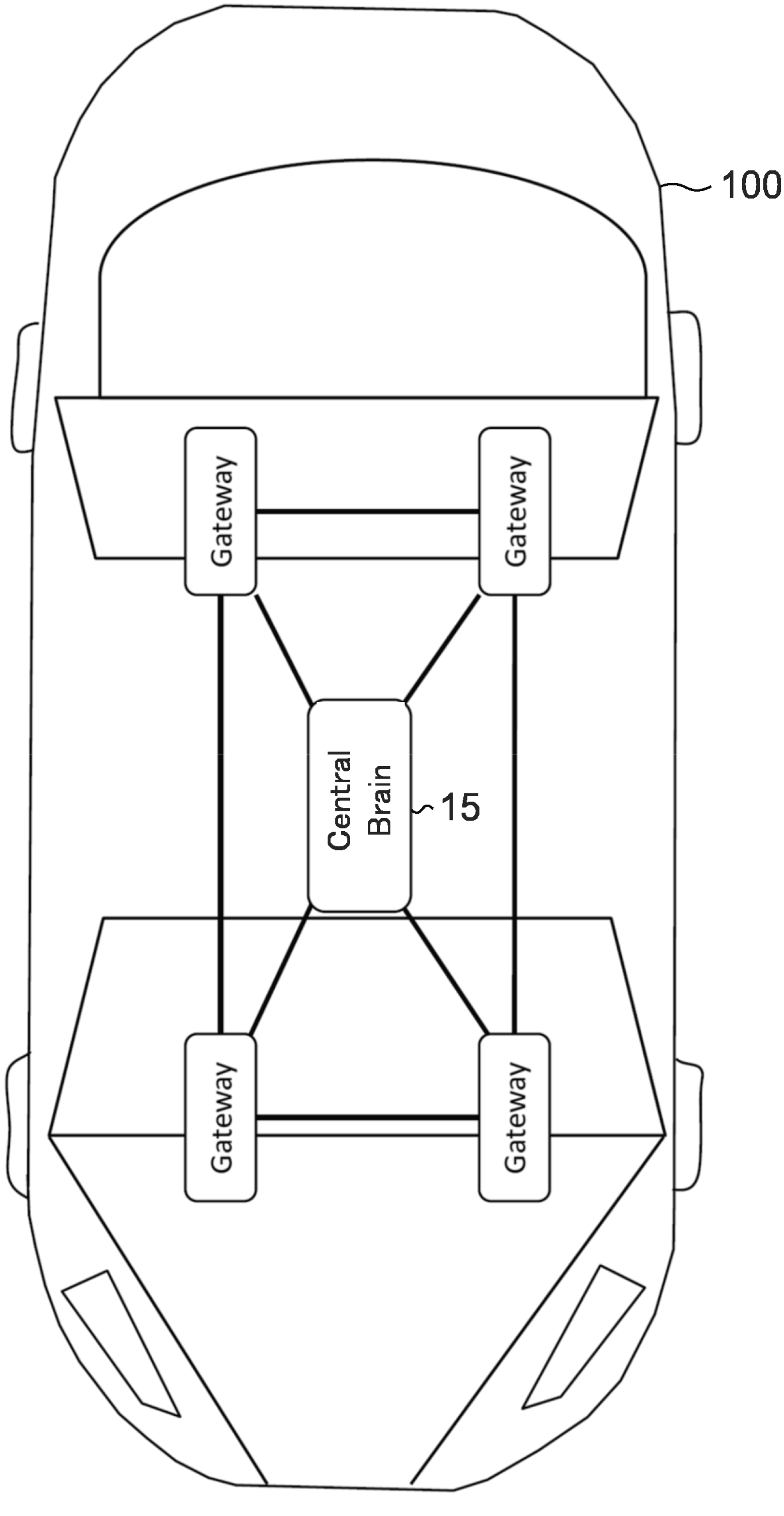

FIG.2A

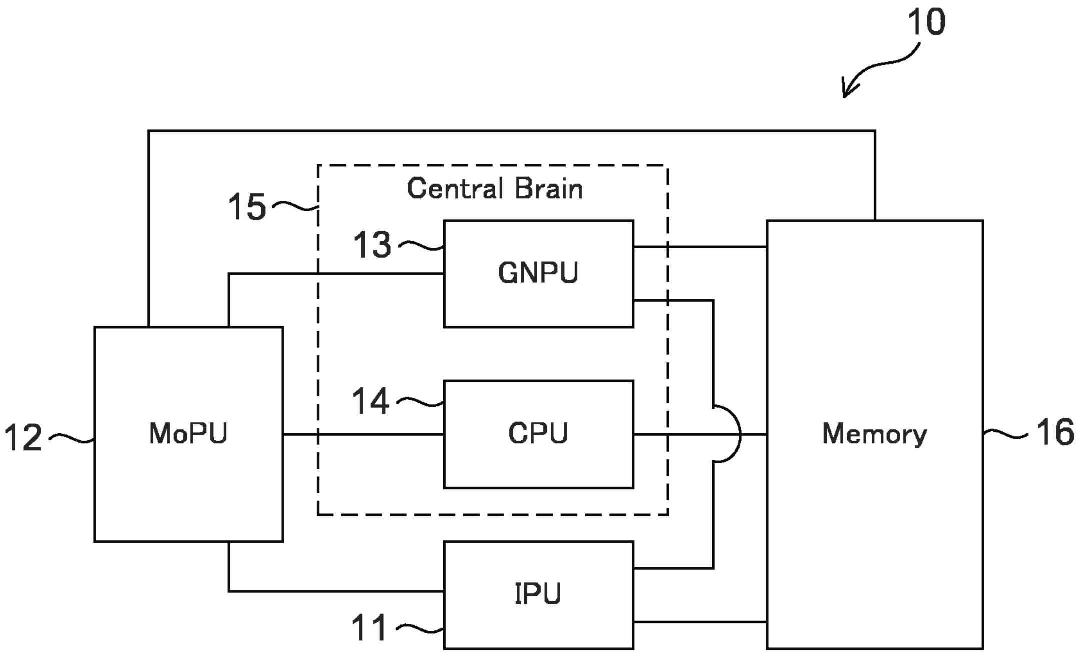

FIG.2B

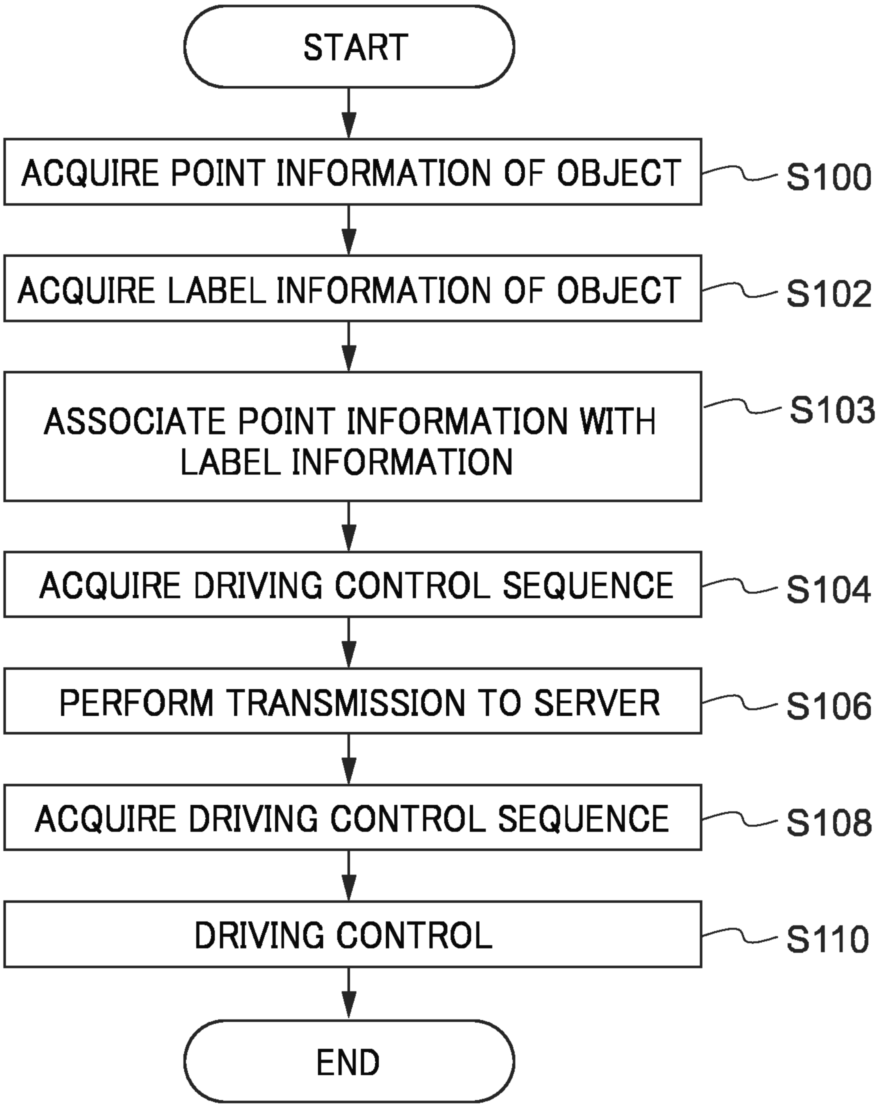
START
ACQUIRE POINT INFORMATION OF OBJECT
S100
ACQUIRE LABEL INFORMATION OF OBJECT
S102
ASSOCIATE POINT INFORMATION WITH LABEL INFORMATION
S103
ACQUIRE DRIVING CONTROL SEQUENCE
S104
PERFORM TRANSMISSION TO SERVER
S106
ACQUIRE DRIVING CONTROL SEQUENCE
S108
DRIVING CONTROL
S110
END

FIG.2C

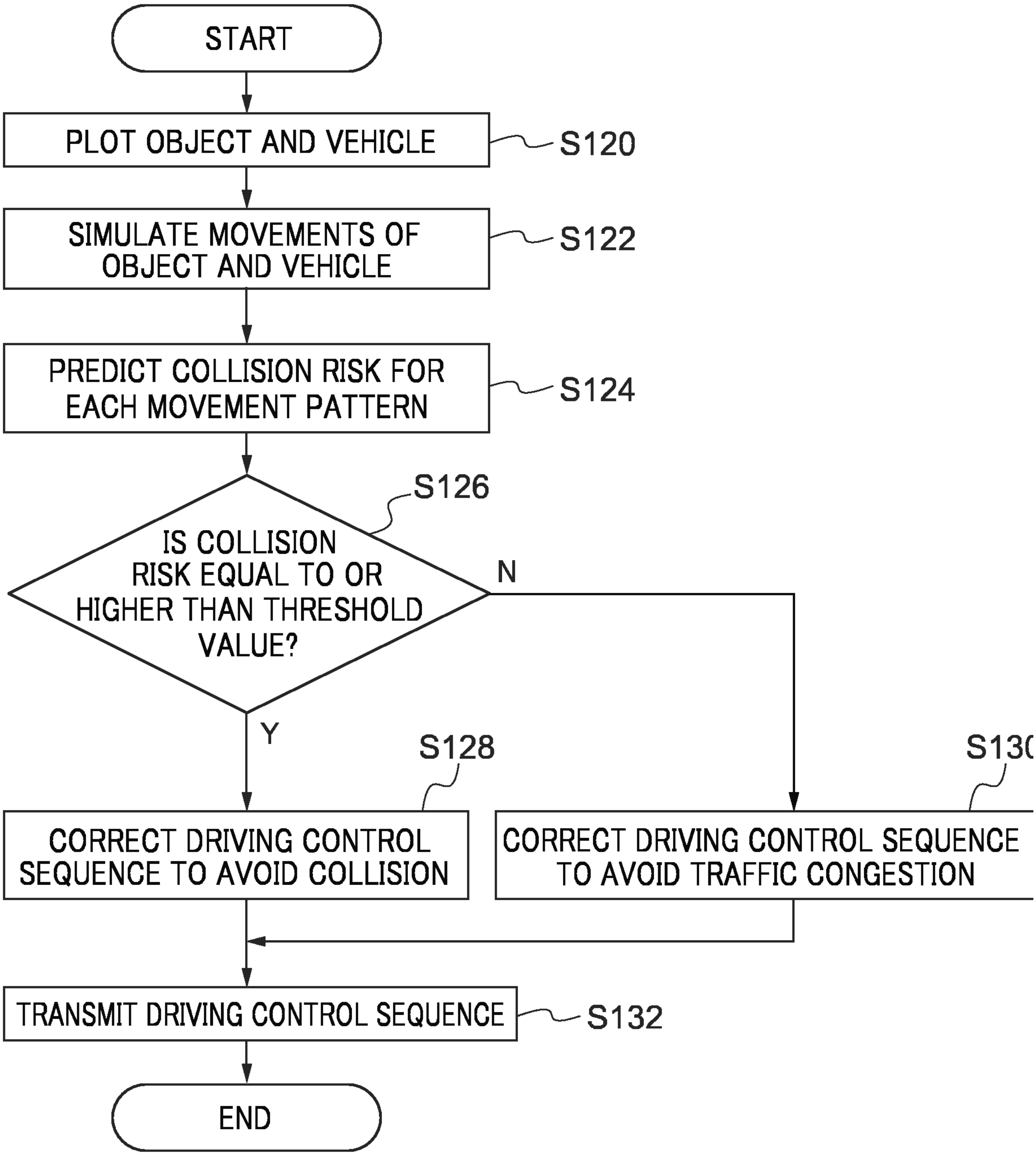
START
PLOT OBJECT AND VEHICLE
S120
SIMULATE MOVEMENTS OF OBJECT AND VEHICLE
S122
PREDICT COLLISION RISK FOR EACH MOVEMENT PATTERN
S124
S126
IS COLLISION RISK EQUAL TO OR HIGHER THAN THRESHOLD VALUE?
N
Y
S128
S13
CORRECT DRIVING CONTROL SEQUENCE TO AVOID COLLISION
CORRECT DRIVING CONTROL SEQUENCE TO AVOID TRAFFIC CONGESTION
TRANSMIT DRIVING CONTROL SEQUENCE
S132
END

FIG.3

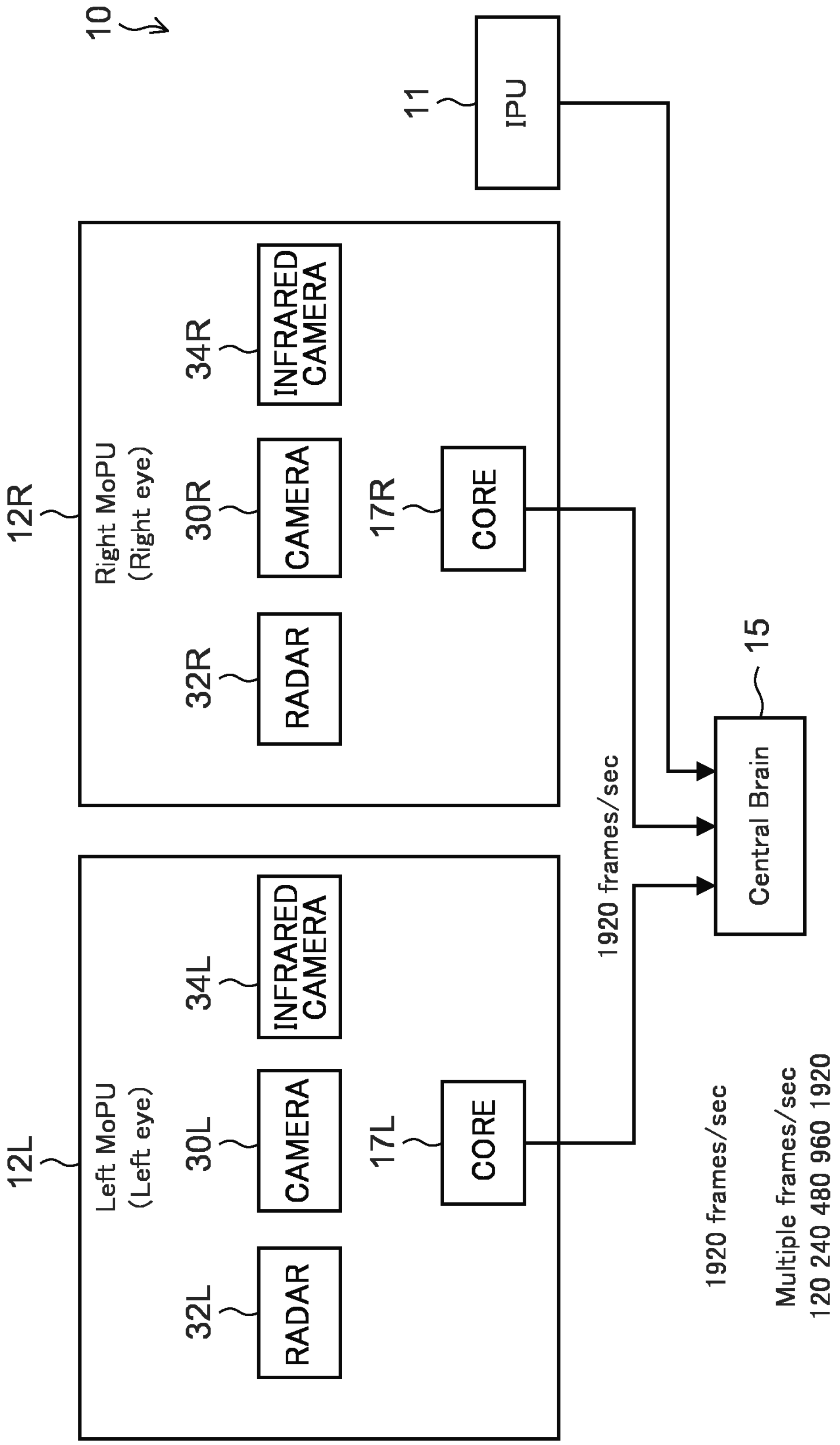
10
11
IPU
12R
Right MoPU
(Right eye)
32R
RADAR
30R
CAMERA
34R
INFRARED CAMERA
17R
CORE
12L
Left MoPU
(Left eye)
32L
RADAR
30L
CAMERA
34L
INFRARED CAMERA
17L
CORE
1920 frames/sec
15
Central Brain
1920 frames/sec
Multiple frames/sec
120 240 480 960 1920

FIG.4

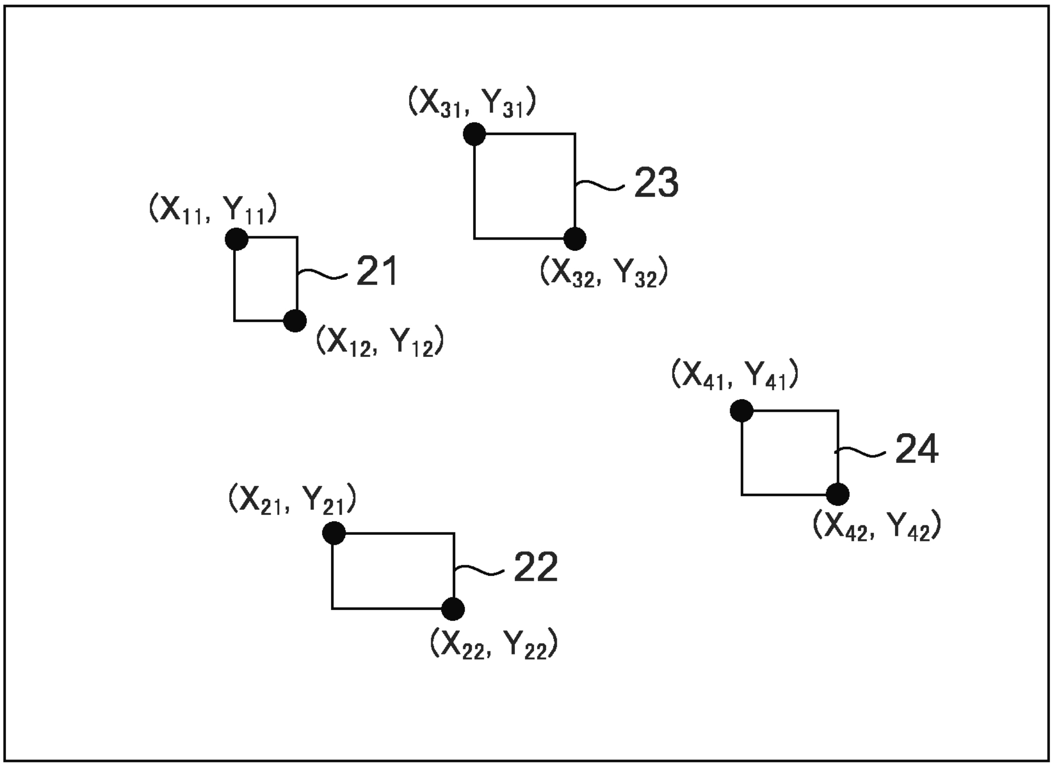
(X31, Y31)
23
(X11, Y11)
21
(X32, Y32)
(X12, Y12)
(X41, Y41)
24
(X21, Y21)
(X42, Y42)
22
(X22, Y22)

FIG.5

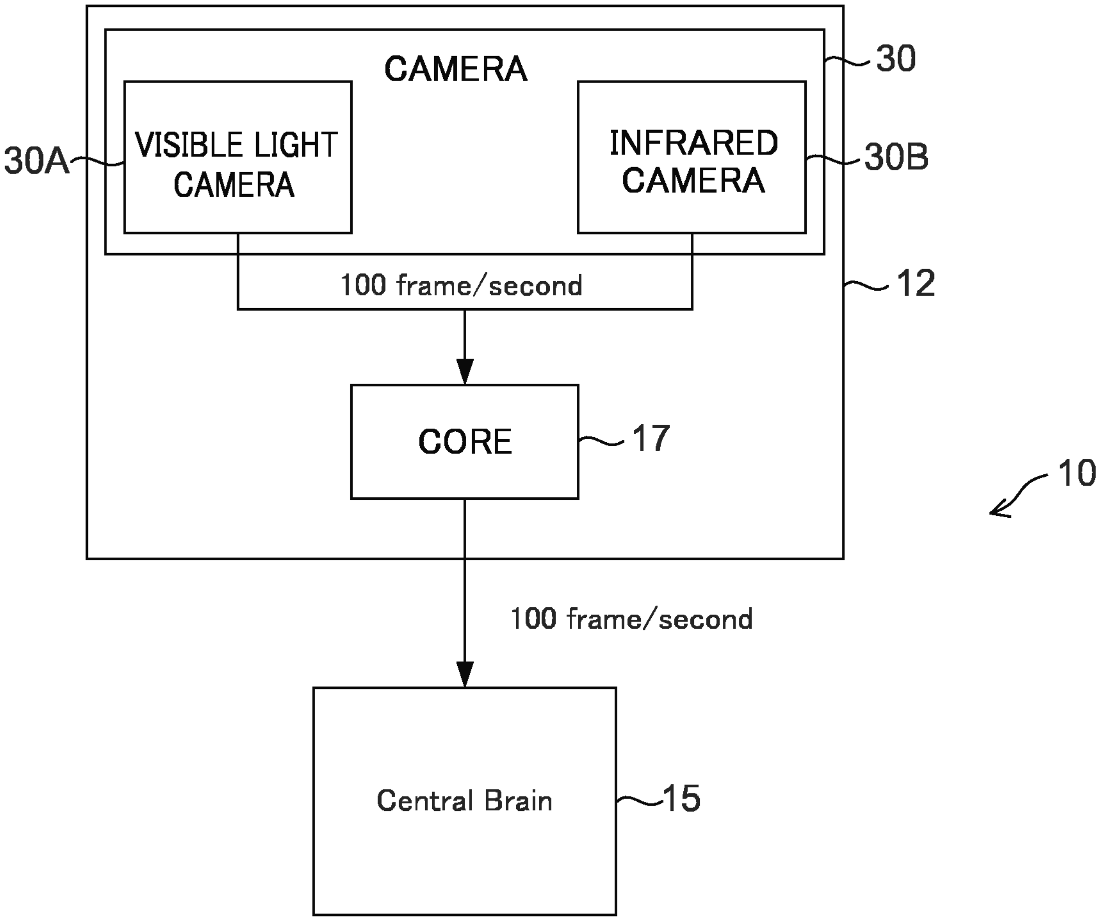
CAMERA
30
VISIBLE LIGHT CAMERA
30A
INFRARED CAMERA
30B
100 frame/second
12
CORE
17
10
100 frame/second
Central Brain
15

FIG.6

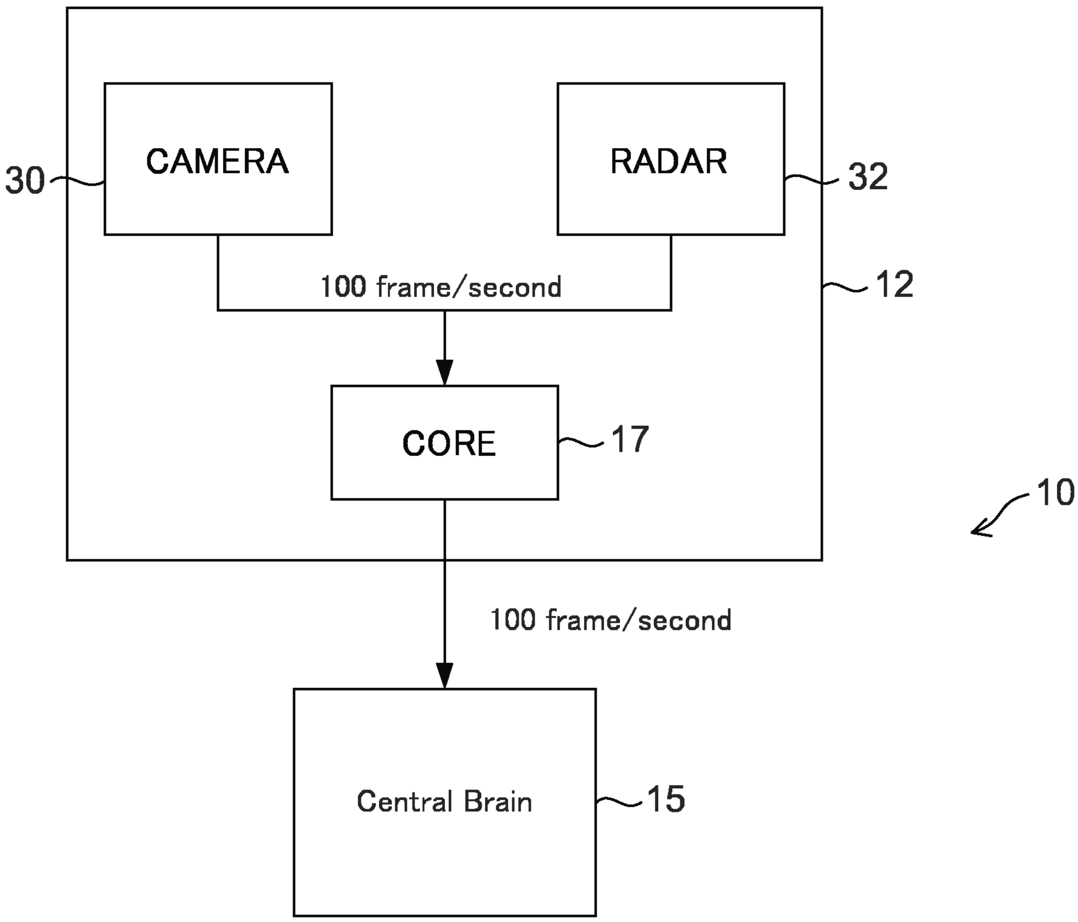
CAMERA
RADAR
30
32
100 frame/second
12
CORE
17
10
100 frame/second
Central Brain
15

FIG.7

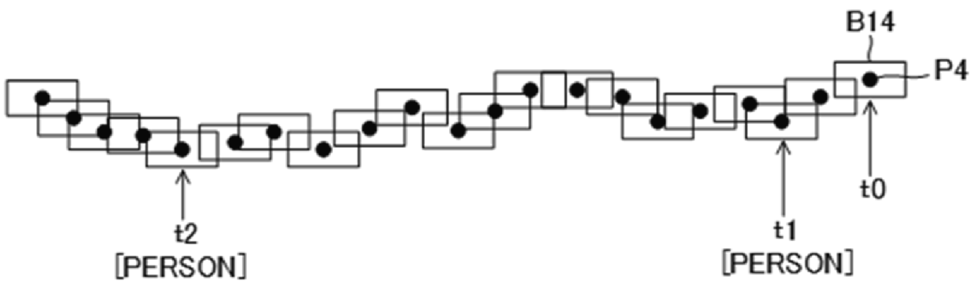


FIG.8

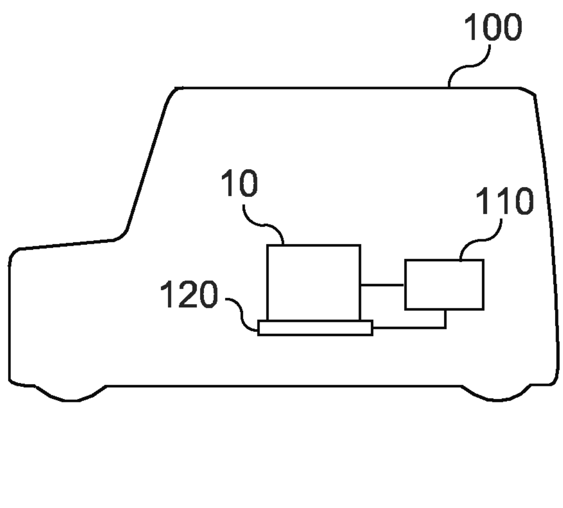

FIG.9

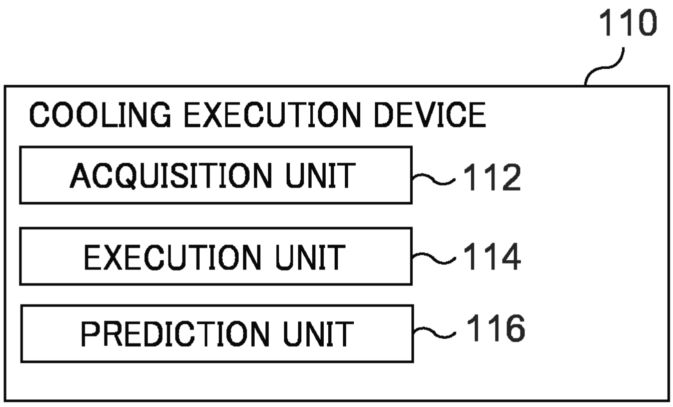
110
COOLING EXECUTION DEVICE
ACQUISITION UNIT
112
EXECUTION UNIT
114
PREDICTION UNIT
116

FIG.10

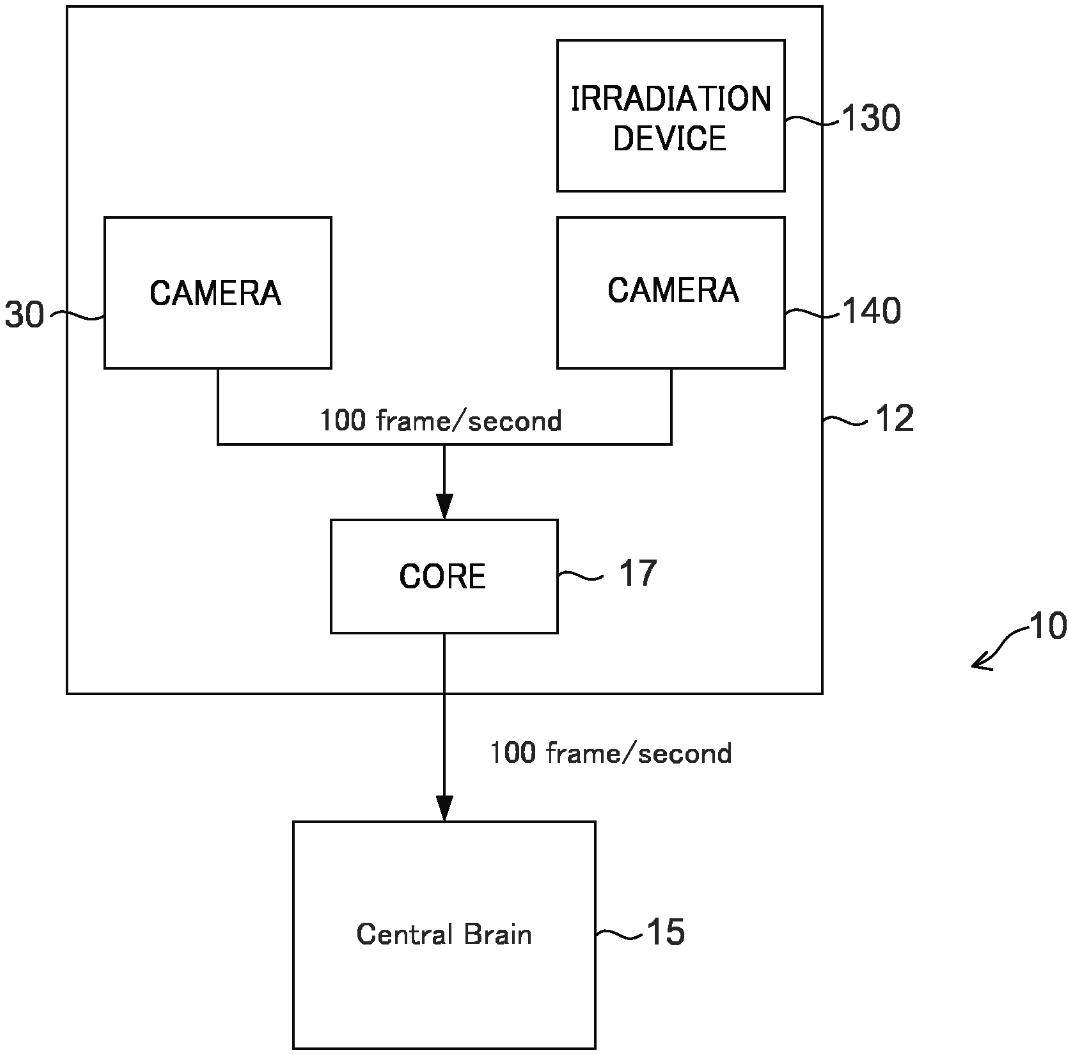
IRRADIATION DEVICE
130
CAMERA
30
CAMERA
140
100 frame/second
12
CORE
17
10
100 frame/second
Central Brain
15

FIG.11

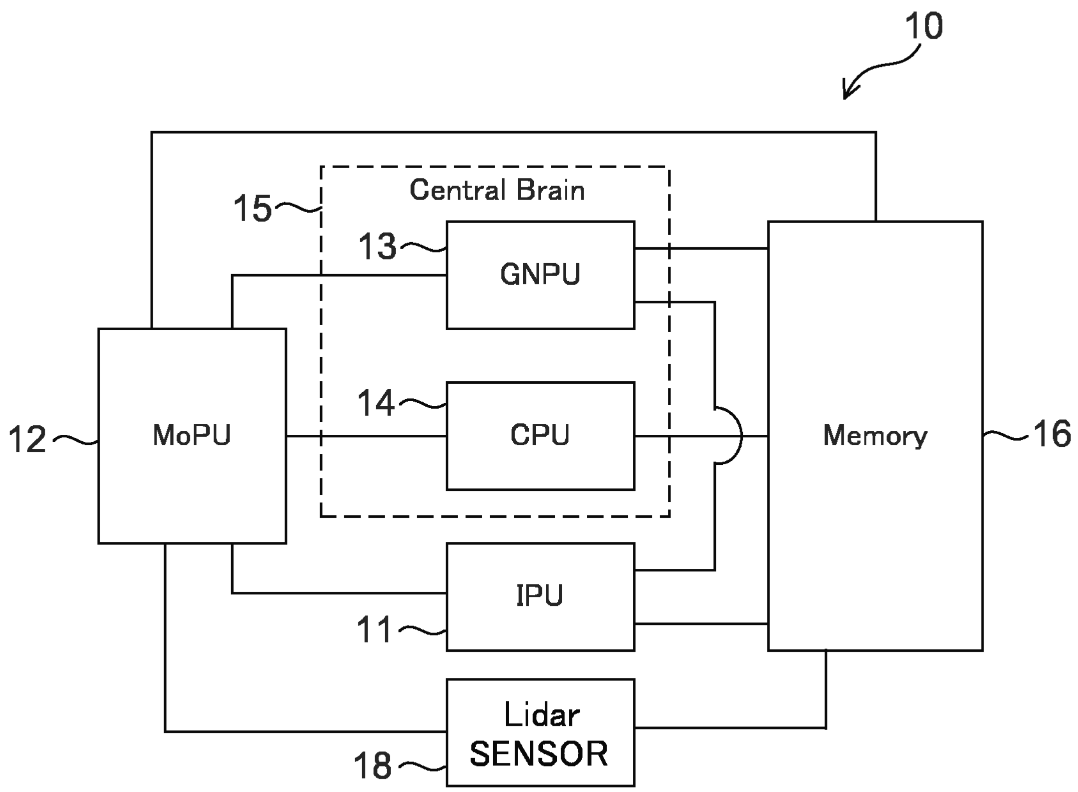
10
15
Central Brain
13
GNPU
14
CPU
12
MoPU
Memory
16
IPU
11
Lidar
SENSOR
18

FIG.12

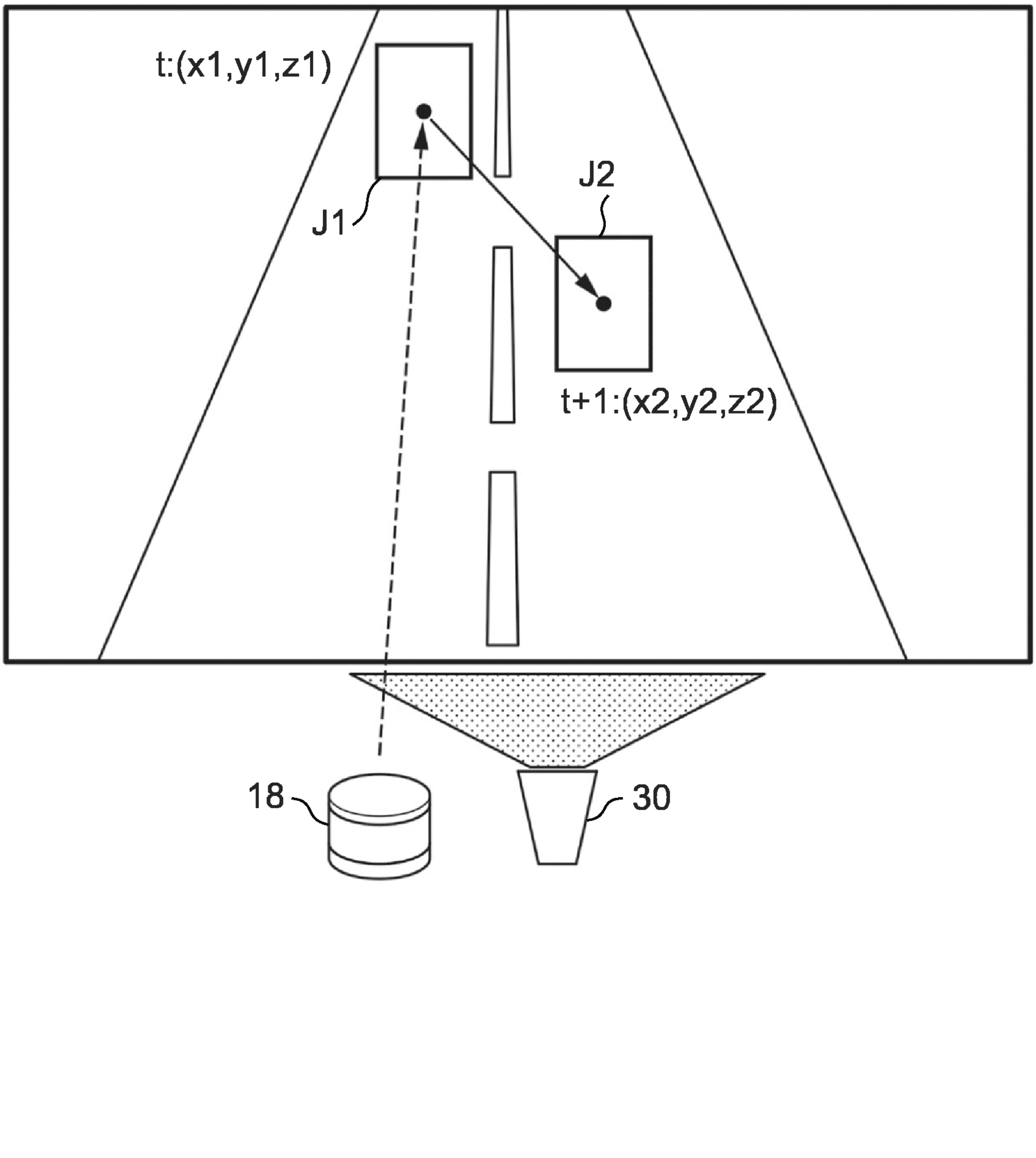

FIG.13

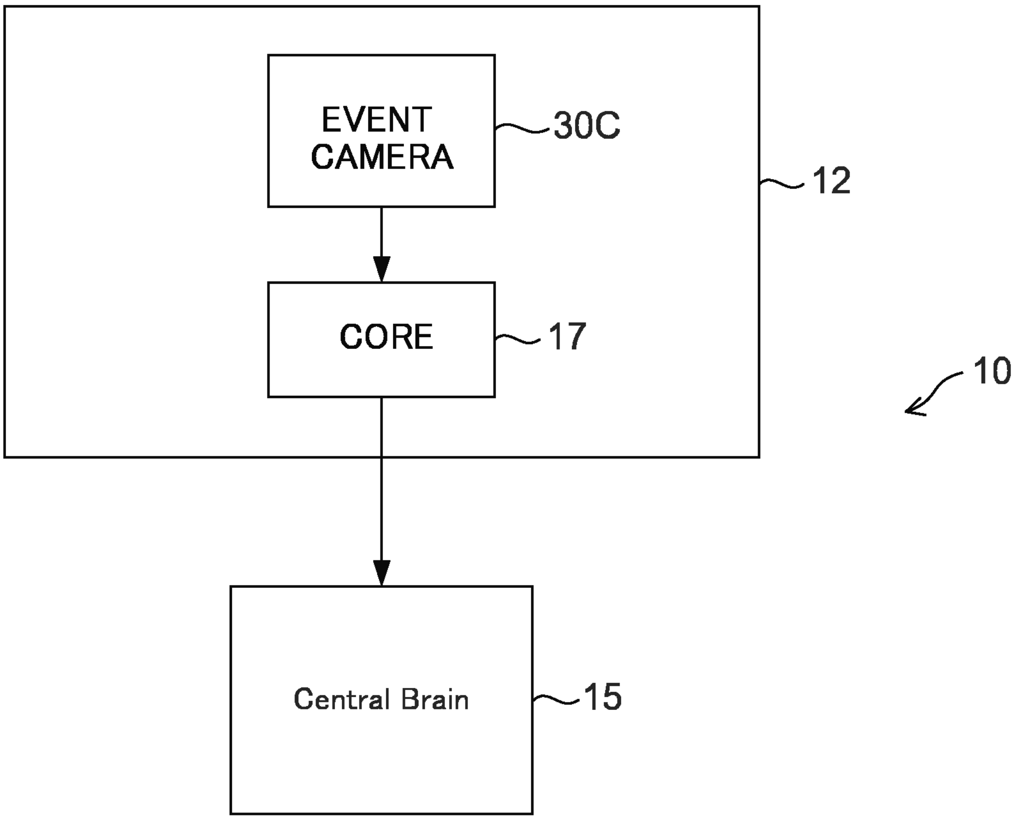

FIG.14

(A)

(B)

(C)

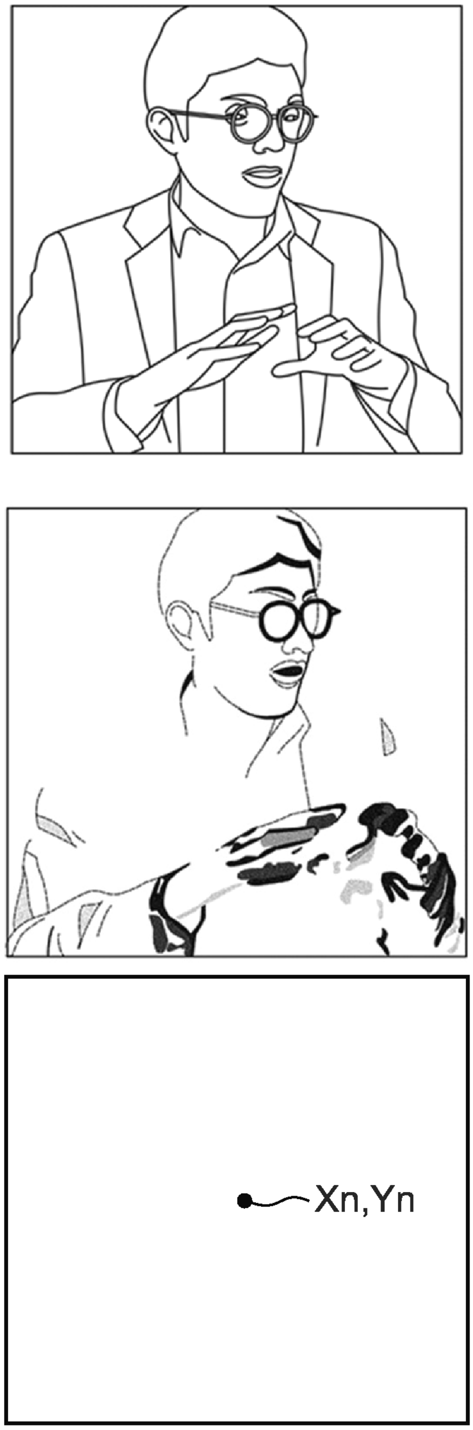

FIG.15

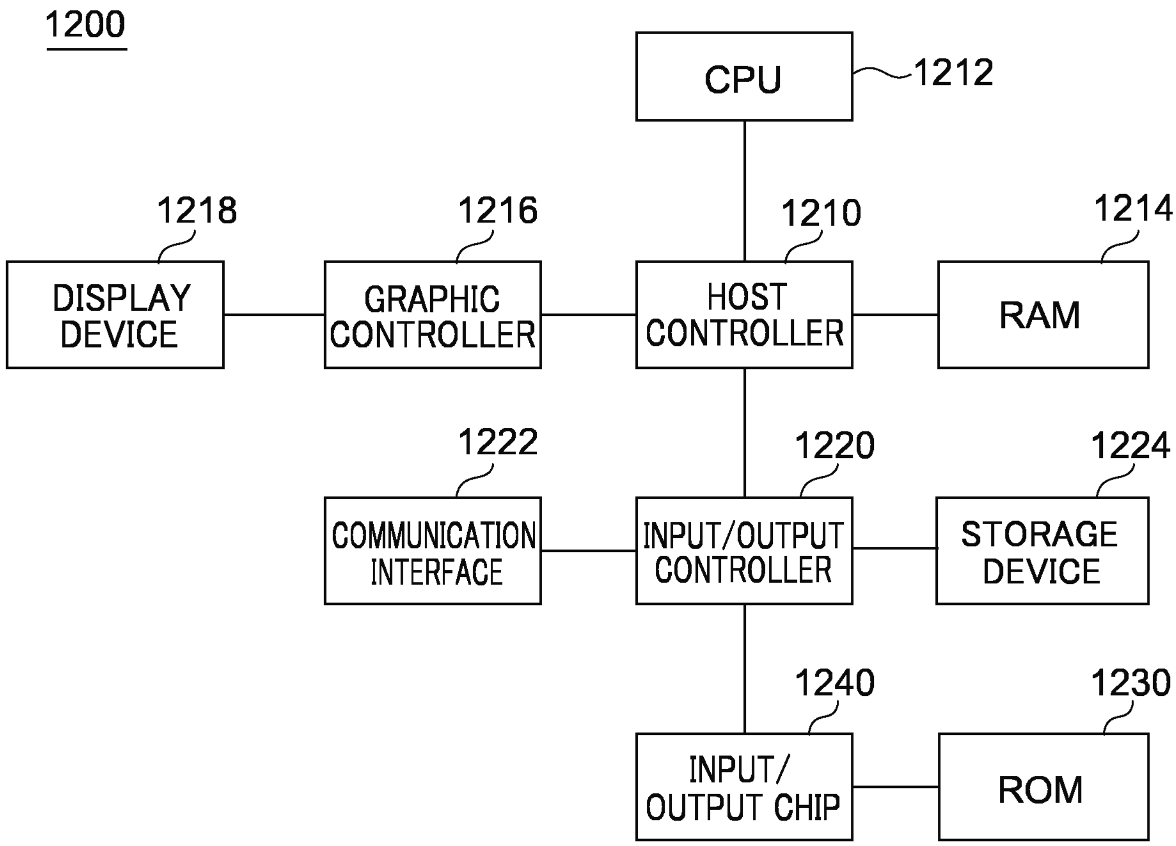
1200
CPU
1212
1218
1216
1210
1214
DISPLAY DEVICE
GRAPHIC CONTROLLER
HOST CONTROLLER
RAM
1222
1220
1224
COMMUNICATION INTERFACE
INPUT/OUTPUT CONTROLLER
STORAGE DEVICE
1240
1230
INPUT/ OUTPUT CHIP
ROM

## INTERNATIONAL SEARCH REPORT

International application No.
**PCT/JP2024/036125**

**A. CLASSIFICATION OF SUBJECT MATTER**

***G08G 1/16***(2006.01)i; ***G16Y 10/40***(2020.01)i; ***G16Y 20/20***(2020.01)i; ***G16Y 40/10***(2020.01)i
FI: G08G1/16 A; G16Y10/40; G16Y20/20; G16Y40/10

According to International Patent Classification (IPC) or to both national classification and IPC

**B. FIELDS SEARCHED**

Minimum documentation searched (classification system followed by classification symbols)

G08G1/00-99/00; B60W10/00-10/30; B60W30/00-60/00; G16Y10/40; G16Y20/20; G16Y40/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2021/070651 A1 (SONY CORPORATION) 15 April 2021 (2021-04-15) paragraphs [0020]-[0023], [0030], [0045]-[0046], [0050], [0052]-[0053], [0055]-[0056], [0061]-[0062], [0068]-[0070], [0073], [0112], [0140]-[0142] | 1-6 |
| Y | JP 2023-032446 A (HONDA MOTOR CO., LTD.) 09 March 2023 (2023-03-09) paragraphs [0025], [0041]-[0043] | 1-6 |
| Y | JP 2019-191691 A (SONY SEMICONDUCTOR SOLUTIONS CORP.) 31 October 2019 (2019-10-31) paragraphs [0084]-[0085] | 2-3 |
| Y | JP 2022-061859 A (DENSO CORPORATION) 19 April 2022 (2022-04-19) paragraph [0051] | 3 |
| Y | JP 2017-097457 A (MITSUBISHI ELECTRIC CORPORATION) 01 June 2017 (2017-06-01) paragraph [0064] | 3 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/036125**

| Patent document cited in search report | Publication date (day/month/year) | Patent family member(s) | Publication date (day/month/year) |
|---|---|---|---|
| WO 2021/070651 A1 | 15 April 2021 | US 2022/0342427 A1<br>paragraphs [0051]-[0054], [0061], [0076]-[0077], [0082], [0084]-[0085], [0087]-[0088], [0094]-[0095], [0101]-[0103], [0106], [0145], [0176]-[0178]<br>DE 112020004872 T5<br>CN 114556252 A | |
| JP 2023-032446 A | 09 March 2023 | US 2023/0174069 A1<br>paragraphs [0035], [0051]-[0053]<br>CN 115723781 A | |
| JP 2019-191691 A | 31 October 2019 | (Family: none) | |
| JP 2022-061859 A | 19 April 2022 | US 2023/0219541 A1<br>paragraphs [0070]-[0071]<br>CN 116323343 A | |
| JP 2017-097457 A | 01 June 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024036125 W
- JP 2023179071 A
- JP 2022035198 A